# EUROPÄISCHE PATENTSCHRIFT

(11) **EP 0 816 963 B1**
(45) Veröffentlichungstag und Bekanntmachung des Hinweises auf die Patenterteilung: **29.01.2003**
(21) Anmeldenummer: 97810386.9
(22) Anmeldetag: 18.06.1997
(51) Int. Cl.: G05D 13/64, G05B 19/425, H02P 5/52, B41F 13/00, H04L 12/40

(54) **Verfahren zum Betrieb eines Antriebssystems und Vorrichtung zur Durchführung des Verfahrens**
Operating method of a drive system and device for implementing the method
Procédé de fontionnement d'un sytème d'entraînement aussi que dispositif pour la mise en oeuvre de ce procédé

(30) Priorität: 01.07.1996 DE 19626287
(43) Veröffentlichungstag der Anmeldung: 07.01.1998
(73) Patentinhaber: ABB Schweiz AG, 5400 Baden (CH)
(72) Erfinder: Flamm, Heinz, 5612 Villmergen (CH); Furrer, Franz, 5442 Fislisbach (CH); Güth, Reinhold, Dr., 5452 Oberrohrdorf (CH)
(74) Vertreter: ABB Patent Attorneys

(56) Entgegenhaltungen:
- EP-A- 0 382 029
- DE-A- 4 127 531
- DE-A- 4 221 062
- US-A- 3 967 058
- US-A- 4 864 431
- US-A- 5 600 634

## Beschreibung

### Technisches Gebiet

Die Erfindung betrifft die elektrische Antriebstechnik. Sie geht aus von einem Verfahren zum Betrieb eines Antriebssystems nach dem Oberbegriff des ersten Anspruchs. Die Erfindung betrifft im weiteren eine Vorrichtung zur Durchführung des Verfahrens.

Anwendungsgebiete der Erfindung sind beispielsweise Werkzeugmaschinen und Rotationsdruckmaschinen. Eine bevorzugte Anwendung sind Rotationsdruckmaschinen für den Zeitungsdruck mit einer Vielzahl von einzeln angetriebenen Druckzylindern und mit flexiblen Produktionsmöglichkeiten.

### Stand der Technik

Ein gattungsgemässes Verfahren bzw. Vorrichtung ist aus dem Skriptum des Vortrages gehalten an dem "Ifra"-Seminar, 21. und 22. Mai 1996 von Juha Kankainen, Honeywell Oy, Varkaus, Finnland bekannt. Es wird dort ein wellenloses Antriebssystem vorgestellt, bei dem mehrere Antriebsgruppen vorgesehen sind, wobei jede Antriebsgruppe eine Antriebssteuerung und mindestens einen Antrieb umfasst. Der Antrieb seinerseits umfasst einen Antriebsregler und mindestens einen Motor. Die Antriebsregler sind über einen Antriebsbus (im erwähnten Dokument als "vertikaler SERCOS-Ring" bezeichnet) untereinander verbunden. Die Antriebssteuerungen (als "Prozessstation" bezeichnet) sind über ein eigenes Antriebsdatennetz in Form eines Ringes verbunden. Die Antriebssteuerungen sind mit übergeordneten Steuereinheiten verbunden. Nach dem SERCOS-Standard werden die Antriebe über einen lokalen Synchronisationstakt synchronisiert.

In der DE 41 27 531 A1 ist ein Verfahren gemäß Oberbegriff des Anspruchs 1 und Vorrichtungen gemäß den Oberbegriffen der Ansprüche 13 und 18 angegeben, bei dem einem Bussystem beziehungsweise einem Antriebsdatennetz von einem zentralen Zeitgeber ein Zeittakt vorgegeben wird. Die Antriebe und Stellelemente des Antriebssystems weisen zusätzlich individuelle Zeittaktgeber mit lokalen Synchronisationstakten auf, die über eine vom Antriebsdatennetz unabhängige Übertragungsstrecke auf den Zeittakt des zentralen Zeitgebers synchronisiert werden.

Ein weiteres Konzept für ein wellenloses Antriebssystem in Form einer Rotationsdruckmaschine ist aus der Deutschen Offenlegungsschrift DE 42 14 394 A1 bekannt. Die in dieser Schrift offenbarte Rotationsdruckmaschine stellt ein Antriebssystem dar, das mindestens zwei Antriebsgruppen, in der Form von einzeln angetriebenen Druckstellengruppen umfasst. Die Antriebsgruppen weisen eine Antriebssteuerung und mindestens einen Antrieb, bestehend aus einem Motor und einem Antriebsregler, auf. Die Antriebsgruppen erhalten ihre Positionsreferenz (Leitachse) direkt von dem Falzapparat. Die Antriebsregler der Antriebgruppen sind ebenfalls über einen Antriebsbus verbunden. Die Antriebssteuerungen sind über einen Datenbus untereinander und mit einer Bedienungs- und Datenverarbeitungseinheit verbunden. Über diesen Datenbus erfolgt die Vorgabe von Sollwerten und die Verwaltung der Druckstellengruppen.

Die Antriebsregler eines derartigen Antriebssystems ermöglichen eine Drehmomentenregelung, Geschwindigkeitsregelung (Drehzahlregelung) oder Positionsregelung (Winkellageregelung) der angetriebenen Achse. Bei hohen Anforderungen nach winkelsynchronem Gleichlauf, wie sie beispielsweise bei Antriebssystemen in Werkzeugmaschinen und in Druckmaschinen bestehen, werden bevorzugt Positionsregelungen (Winkellageregelungen) verwendet.

Die digitalen Antriebsregler sind bevorzugt mit schnellen digitalen Signalprozessoren ausgestattet. Solche schnellen digitalen Antriebsregler können einen Regelungszyklus bei Positionsregelung in sehr kurzer Rechenzeit ausführen, bevorzugt in 250µs oder in kürzerer Zykluszeit.

In solchen Antriebssystemen werden bevorzugt Drehstrommotoren eingesetzt. Die elektrische Antriebsenergie wird dem einzelnen Motor über eine Leistungselektronikschaltung, bevorzugt mit Frequenzumrichterfunktion zugeführt. Die Leistungselektronikschaltung wird vom digitalen Antriebsregler angesteuert.

Die einzelnen Antriebe sind mit hochgenauen Istwertgebern ausgestattet, bevorzugt optoelektronischen Positionsgebern. Die Signalauflösungen solcher bekannten, hochgenauen Istwertgeber liegen im Bereich von über 1'000'000 Punkten pro Umdrehung (360°). Die praktisch nutzbaren Messgenauigkeiten der bekannten Istwertgeber liegen im Bereich von mehr als 100'000 Punkten pro Umdrehung (360°).

Der Istwertgeber für den einzelnen Antrieb ist oft auf der Motorachse angebracht. Es sind aber auch Anordnungen bekannt, bei denen ein Istwertgeber an der vom Motor angetriebenen Last angebracht ist. Zum Beispiel ist es bei Druckmaschinen vorteilhaft, einen hochauflösenden Positionsgeber am drehmomentenfreien Ende des angetriebenen Druckzylinders anzubringen.

Entscheidend für den hochgenauen Gleichlauf mehrerer positionsgeregelter Einzelantriebe ist die genaue Synchronisation der Antriebe über einen gemeinsamen Takt und die zyklische Belieferung mit Positionssollwerten im vorgegebenen Taktrahmen.

Der gemeinsame Takt stellt sicher, dass die einzelnen Antriebsregler ihre Positionsregelungsfunktionen zeitlich exakt synchron (zeitgleich) ausführen und dabei die vorgegebenen Positionssollwerte zeitlich konsistent (zeitgleich) auswerten.

Es sind Antriebssysteme bekannt, bei denen eine Anzahl von Einzelantrieben von einer zentralen Antriebssteuerung über einen schnellen Antriebsbus mit einem gemeinsamen Synchronisationstakt und mit Sollwertdaten beliefert werden.

Die Datenübertragung erfolgt bevorzugt nach den Vorgaben des SERCOS-Standard. Der SERCOS-Standard ist eine von mehreren Antriebsherstellern vereinbarte Datenschnittstelle, welche die Synchronisation und die Sollwertübertragung für die Antriebe einer Antriebsgruppe unterstützt.

Zu SERCOS-Standard siehe: "Kurzübersicht der Produkte mit SERCOS-Interface", 2. Auflage, Oktober 1995, Fördergemeinschaft SERCOS interface e.V., Im Mühlefeld 28, D-53123 Bonn; oder "SERCOS interface, Digitale Schnittstelle zur Kommunikation zwischen Steuerungen und Antrieben in numerisch gesteuerten Maschinen", Update 9/91, Fördergemeinschaft SERCOS interface e.V., Pelzstrasse 5, D-5305 Alfter/Bonn.

Der Antriebsbus ist dabei bevorzugt als ringförmige Glasfaserverbindung realisiert. Die Datenübertragung wird dabei von einer zentralen Hauptstation (Busmaster) gesteuert und koordiniert. Die an die ringförmige Datenleitung angeschlossenen einzelnen Antriebe sind Unterstationen, d.h. Slaves, bei der Datenübermittlung. Die einzelnen Antriebe erhalten einen gemeinsamen Synchronisationstakt und ihre Sollwertdaten von der zentralen Antriebssteuerung über den Antriebsbus. Die zentrale Antriebssteuerung erzeugt den gemeinsamen Synchronisationstakt und berechnet die Sollwerte für die einzelnen Antriebe der Antriebsgruppe. Die Antriebssteuerung liefert dabei in kurzen Zykluszeiten jeweils neue Sollwerte für die einzelnen Antriebsregler. Bevorzugte Zykluszeiten für die Übertragung des gemeinsamen Synchronisationstaktes und für die Berechnung und die Übertragung der Sollwerte der einzelnen Antriebe einer Antriebsgruppe sind beim SERCOS-Standard 62µs, 125µs, 250µs, 500µs, 1ms, 2ms, 3ms,... 63ms, 64ms oder 65ms.

Mit derartigen Antriebssystemen sind recht hohe Gleichlaufgenauigkeiten zwischen den Antrieben einer Antriebsgruppe realisierbar. Es lassen sich mechanische Synchronwellen und mechanische Getriebe durch elektronisch synchronisierte Gruppen von Einzelantrieben ersetzen. Derartige Antriebssysteme mit elektronischer Synchronisation der Einzelantriebe ermöglichen somit elektronische Synchronwellen und elektronische Getriebefunktionen.

Mit derartigen Antriebssystemen können beispielsweise Rotationsdruckmaschinen mit einzeln angetriebenen Druckzylindern - ohne mechanische Synchronwellen - realisiert werden (siehe z.B. die eingangs genannte Offenlegungsschrift und das Vortragsskriptum).

Rotationsdruckmaschinen für den Mehrfarbendruck mit einzeln angetriebenen Druckzylindern stellen besonders hohe Anforderungen an den winkelsynchronen Gleichlauf der einzelnen Antriebe. Beim Vierfarbendruck sind oft Gleichlaufgenauigkeiten der einzelnen Druckzylinder in der Grössenordnung von 10µm gefordert. Bei einem Druckzylinderumfang von z.B. lm bedeutet dies, dass eine Positionsmessung und Positionsregelung mit einer Genauigkeit von besser als 100'000 Punkten pro Zylinderumdrehung (360°) erfolgen muss. Bei Druckgeschwindigkeiten (Papierbahngeschwindigkeiten) von mehr als 10m/s bedeutet dies weiterhin, dass der zeitliche Synchronisationsfehler zwischen den einzelnen Antrieben der auf eine Papierbahn druckenden Zylinder (nach der Formel Zeit = Weg / Geschwindigkeit = 10µm / 10m/s = 1µs) kleiner als 1µs sein muss.

Das bedeutet, dass die einzelnen Antriebsregler bei ihren Positionsregelungen mit einer zeitlichen Genauigkeit von besser als 1µs über den Antriebsbus synchronisiert werden müssen.

Mit den genannten Antriebssystemen und der Synchronisation und der Sollwertbelieferung der Einzelantriebe über eine ringförmige Glasfaserverbindung nach den Vereinbarungen des SERCOS-Interface lassen sich diese Anforderungen lediglich für Antriebsgruppen mit einer begrenzten Anzahl von Einzelantrieben erreichen.

Durch die zentralen, gemeinsamen Einrichtungen, Antriebssteuerung und Antriebsbus, ergeben sich aber bestimmte Engpässe und Nachteile, die sich mit wachsender Anzahl von Antrieben in der Antriebsgruppe zunehmend negativ auswirken. Die wichtigsten Begrenzungen und Nachteile sind die folgenden:

Mit steigender Anzahl von Antrieben wächst generell der Synchronisationsfehler der Datenleitung. Bei einer ringförmigen Glasfaserverbindung mit Datenübertragungsfunktionen, beispielsweise nach den Vereinbarungen des SERCOS Interface, gilt folgendes für das Anwachsen des Synchronisationsfehlers: Bei jedem an den Glasfaserring angeschlossenen Antriebsregler erfolgt eine zeitdiskrete Signalabtastung mit einer bestimmten Abtastperiode, zum Beispiel 30ns. Das durch zeitdiskrete Abtastung beim Empfänger reproduzierte binäre Signal kann somit maximal um die Abtastperiode, z.B. 30ns, zeitlich zittern (auf der Zeitachse gegenüber dem Originalsignal beim Sender). Somit kommt es bei jedem Teilnehmer, d.h. Antrieb, zu einem zeitlichen Abtastfehler der sich als Jitter (zeitliches Zittern) bemerkbar macht. Dieser Abtastfehler (Jitter) betrifft auch den gemeinsamen Synchronisationstakt. Der Abtastfehler macht sich deshalb als Synchronisationsfehler bemerkbar. Das abgetastete Signal wird im einzelnen Antrieb verwendet und - nach entsprechender Regeneration des Signals - auch an den jeweils nächsten Antriebsregler im Glasfaserring weitergegeben. Entsprechend der Anzahl von Antrieben am Glasfaserring summieren sich die Synchronisationsfehler (Jitter) der einzelnen Teilnehmer zu einem Gesamtfehler. Zum Beispiel bei 33 Antrieben am Glasfaserring mit je 30ns Abtastfehler ergibt sich ein Gesamtsynchronisationsfehler von ca. 1µs.

Mit steigender Anzahl Antriebe im Ring nimmt auch die benötigte Zykluszeit für die Datenübertragung zu. Wenn zum Beispiel pro Antrieb eine Datenübertragungszeit von 250µs benötigt wird, so bedeutet das bei Anschluss von 32 Antrieben an einen Ring, dass die Zykluszeit für die Datenübertragung mindestens 8ms betragen muss. Ein Ansteigen der Zykluszeit für die Übertragungszyklen bedeutet auch längere Zeitabstände zwischen den einzelnen Synchronisationstakten - im genannten Beispiel sind das 8ms. Zwischen aufeinanderfolgenden Synchronisationstakten des Ringes laufen die lokalen Taktgeneratoren der einzelnen Antriebe frei - und wandern (driften) dabei entsprechend der Ungenauigkeit der verwendeten Quarze mehr oder weniger auseinander.

Wenn der lokale Taktgenerator eines Antriebes zum Beispiel mit einem Quarz der Qualität 100ppm (parts per million) ausgestattet ist, so kann dieser Taktgenerator auf Grund seiner Ungenauigkeit nach 8ms eine zeitliche Abweichung von (plus oder minus) 0,8µs aufweisen. Die zeitliche Abweichung zwischen zwei beliebigen Antrieben, die durch die Ungenauigkeit der beiden lokalen Taktgeneratoren verursacht wird, ist die Summe der Ungenauigkeiten der beiden Taktgeneratoren, zum Beispiel (2*0,8µs)= 1,6µs.

Das Wegwandern (Driften) der lokalen Taktgeneratoren der einzelnen Antriebe zwischen 2 aufeinanderfolgenden Synchronisationstakten des Ringes macht sich als zusätzlicher Synchronisationsfehler bemerkbar, da die einzelnen Antriebsregler während eines Datenübertragungszyklus, von beispielsweise 8ms, mehrere Regelungszyklen durchführen.

Bei einem Regelungszyklus im Antrieb von z.B. 250µs und einem Datenübertragungszyklus von z.B. 8ms auf dem Ring führt der Antrieb während eines Datenübertragungszyklusses 32 Regelungsvorgänge durch. Nur der erste Regelungsvorgang ist dabei streng mit dem Synchronisationstakt des Ringes synchronisiert. Bei den folgenden 31 interpolierenden Regelungsvorgängen erfolgt die zeitliche Steuerung über den lokalen Taktgenerator des Antriebes. Die Ungenauigkeit der lokalen Taktgeneratoren der einzelnen Antriebe macht sich bei den interpolierenden Regelungsvorgängen als zusätzlicher Synchronisationsfehler bemerkbar.

Mit ansteigender Anzahl von Antrieben am Ring nimmt also die Zykluszeit der Datenübertragung zu und damit der zeitliche Abstand aufeinanderfolgender Synchronisationstakte, und mit ansteigendem zeitlichen Abstand aufeinanderfolgender Synchronisationstakte vergrössert sich das Auseinanderwandern (Driften) der lokalen Taktgeneratoren (Quarze) der einzelnen Antriebe. Damit wächst der Synchronisationsfehler und die Präzision der Positionsregelung erreicht die geforderten Werte nicht mehr.

Die an einen schnellen Antriebsbus angeschlossenen Antriebsregler erhalten von der zentralen Antriebssteuerung, welche auch Master bei der Datenübertragung ist, nicht nur den gemeinsamen Synchronisationstakt, sondern auch die Sollwertdaten. Mit steigender Anzahl von Antrieben wächst die benötigte Zeit für die Sollwertberechnungen und Sollwertübertragungen. Mit steigender Anzahl von Antrieben wächst die Belastung der zentralen Antriebssteuerung durch die zyklischen Sollwertberechnungen. Die zentrale Antriebssteuerung beliefert die angeschlossenen Antriebe zyklisch mit neuen, individuellen Sollwerten und mit einem gemeinsamen Synchronisationstakt. Die Zykluszeiten für die Sollwertberechnungen und den gemeinsamen Synchronisationstakt liegen bevorzugt in der Grössenordnung von 1ms.

Mit ansteigender Anzahl von angeschlossenen Antrieben wächst der Zeitaufwand für die Sollwertberechnungen in der zentralen Antriebssteuerung. Zum Beispiel bei einer Rechenzeit von 250µs für die Sollwerte eines Antriebs und bei 32 angeschlossenen Antrieben muss die Zykluszeit der Sollwertberechnungen in der Antriebssteuerung mindestens 8ms betragen. Dies stellt eine enorme Rechenbelastung der zentralen Antriebssteuerung dar, die ihrerseits wieder die Anzahl angeschlossener Antriebe limitiert.

Mit steigender Anzahl von Antrieben wachsen die Auswirkungen eines einzelnen Fehlers in der zentralen Antriebssteuerung oder im Antriebsbus.

Die ringförmige Glasfaserverbindung nach dem SERCOS-Standard ist nicht redundant aufgebaut und auch die Antriebssteuerung, welche gleichzeitig Master bei der Datenübertragung ist, ist nicht redundant aufgebaut. Bei einem Fehler in der zentralen Antriebssteuerung oder bei einem Fehler im Antriebsbus fallen somit alle angeschlossenen Antriebe aus.

In industriellen Produktionsanlagen ist es oft gefordert, die Auswirkungen einzelner Fehler auf eine eng begrenzte Umgebung einzuschränken. Ein einzelner Fehler in der Elektronik darf zum Ausfall einer bestimmten Funktionseinheit führen, aber keinesfalls zum Ausfall einer ganzen Produktionsanlage.

Im Druckmaschinenbau wird es zum Beispiel weitgehend toleriert, dass ein einzelner Fehler in der Antriebselektronik zum Ausfall einer Funktionseinheit, z.B. einer Druckeinheit mit 8 Druckzylindern, führt. Nicht tolerierbar ist, dass ein Fehler in der Antriebssteuerung oder im Antriebsbus zum Ausfall einer ganzen Produktionsanlage, z.B. einer ganzen Zeitungsdruckanlage, führt.

Die Anzahl der an eine Antriebssteuerung und einen Antriebsbus anzuschliessenden Antriebe sollte deshalb aus Verfügbarkeitsgründen bevorzugt auf eine bestimmte Anzahl begrenzt sein, so dass ein Ausfall des Antriebsbusses oder der Antriebssteuerung nur Auswirkungen auf eine einzelne Funktionseinheit einer industriellen Anlage hat, z.B. auf eine Drukkeinheit einer Zeitungsdruckanlage.

Ein zentralisiertes Antriebssystem mit einer zentralen Antriebssteuerung und einem Antriebsbus, an die alle im genauen Gleichlauf zu betreibenden Antriebe angeschlossen sind, entspricht oft nicht der natürlichen Struktur, Funktionsverteilung und Modulbildung in grossen technischen Anlagen.

Industrielle Anlagen bestehen oft aus mehreren abgeschlossenen Funktionseinheiten, die jeweils alle zugehörigen mechanischen und elektrischen Funktionen beinhalten.

Steuerungssysteme und Antriebssysteme werden deshalb bevorzugt nach den Funktionseinheiten der industriellen Anlage strukturiert, zugeordnet und verteilt. So ergeben sich abgeschlossene Funktionseinheiten, die einfach und unabhängig voneinander getestet und in Betrieb genommen werden können. Die Schnittstellen zwischen so abgegrenzten Funktionseinheiten sind einfach und überschaubar.

Die Vorteile einer dezentralen, verteilten - an die technische Anlage anpassbaren - Struktur des Steuerungs- und des Antriebssystems ergeben sich besonders aus der klareren Systemstruktur, einfacheren Verständlichkeit, besseren Testbarkeit, eng abgegrenzten Fehlerauswirkungen. Diese Vorteile führen oft zu geringeren Herstellkosten, Betriebskosten und Wartungskosten.

Bei Zeitungsdruckereien, zum Beispiel, werden die Druckeinheiten, Falzapparate und Rollenträger bevorzugt als abgeschlossene Funktionseinheiten gebaut und jeweils mit eigenen, lokalen Steuerungen und eigenen, lokalen Antriebssystemen ausgerüstet.

Ein zentralisiertes Antriebssystem mit einer zentralen Antriebssteuerung ist ein grosses Hindernis zur Realisierung von technischen Anlagen mit abgeschlossenen Funktionseinheiten und einfachen, klaren Schnittstellen.

Der wesentliche Nachteil einer zentralen Antriebssteuerung besteht darin, dass alle Sollwertdaten an die einzelnen Antriebe über die zentrale Antriebssteuerung geleitet werden. Es ist nicht möglich, dass die lokale Steuerung einer Funktionseinheit direkt mit der lokalen Antriebssteuerung der Funktionseinheit kommuniziert, da es dezentrale, lokale Antriebssteuerungen von Funktionseinheiten nicht gibt.

### Darstellung der Erfindung

Aufgabe der Erfindung ist es deshalb, ein Verfahren zum Betrieb eines Antriebssystems anzugeben, durch welches keine Beschränkungen bezüglich Anzahl Antriebe bzw. Antriebsgruppen in Kauf genommen werden müssen. Ausserdem sollen die insbesondere für eine Rotationsdruckmaschine geforderten hohen Genauigkeitsanforderungen erfüllt werden könne, und aus den Antriebsgruppen und Antrieben sollen flexible Funktionseinheiten gebildet werden können. Schließlich soll eine besonders hohe Verfügbarkeit des Aufbaus des Antriebssystems erreicht werden.

Diese Aufgabe wird durch die Merkmale der unabhängigen Ansprüche 1, 13 und 18 gelöst.

Kern der Erfindung ist es, dass die Antriebsregler einer Antriebsgruppe über den Antriebsbus mittels eines lokalen Synchronisationstaktes synchronisiert werden und dass die lokalen Synchronisationstakte über ein die Antriebssteuerungen verbindendes Antriebsdatennetz periodisch an einen globalen Synchronisationstakt angeglichen werden. Die anlagenweite Synchronisation der Antriebe über ein globales Signal erlaubt es, ein Antriebssystem mit einer nahezu beliebigen Anzahl von Antrieben auszurüsten.

Dadurch dass die Sollwerte vorzugsweise nach Massgabe des globalen Synchronisationstaktes ebenfalls synchron zwischen den Antriebssteuerungen über das Antriebsdatennetz übertragen werden, treten auch keine zeitlichen Fehler bei der Sollwert-Übertragung auf. Sehr einfach wird die Sollwert-Berechnung, insbesondere die Berechnung der Positionssollwerte der Antriebe, wenn diese nach Massgabe eines Positionssollwerts einer virtuellen Leitachse in den Antriebsteuerungen erfolgt. Der Positionssollwert der virtuellen Leitachse wird über das Antriebsdatennetz übertragen, und die Antriebssteuerungen berechnen daraus die Positionssollwerte der zugehörigen Antriebe.

Eine besonders hohe Verfügbarkeit des Aufbaus des Antriebssystems erreicht man erfindungsgemäss dadurch, dass jede Antriebssteuerung zur Bildung des globalen Synchronisationstaktes ausgerüstet ist und mittels einer Vorrangssliste bestimmt wird, welche Antriebssteuerung das globale Synchronisationstakt vorgeben darf. Diese Vorrangssliste kann ausserdem zyklisch durchlaufen werden, so dass das globale Synchronisationstakt nacheinander für eine bestimmte Zeitspanne von allen Antriebssteuerungen erzeugt wird.

Um ein zeitliches Auseinanderdriften der einzelnen Antriebsteuerungen aufgrund der Ungenauigkeiten der lokalen Taktgeneratoren während der Datenübertragungszyklen zu vermeiden, ist es allenfalls sinnvoll, das globale Synchronisationstakt durch zusätzliche Nebentakte zu unterteilen.

Die Sollwerte werden mit Vorzug in einem der entsprechenden Antriebssteuerung zugeordneten Zeitfenster übermittelt.

Die Antriebssteuerungen sind zur Durchführung des erfindungsgemässen Verfahren mit einem Synchronisationstaktgenerator für das globale Synchronisationstakt ausgerüstet. Das Antriebsdatennetz kann ausserdem ein erstes und ein zweites Teilnetz umfassen, wobei über das erste Teilnetz das globale Synchronisationstakt und über das zweite Teilnetz die Sollwerte übertragen werden.

Für den Aufbau des Antriebsdatennetzes gibt es die Möglichkeiten einer ringförmigen Struktur oder einer Busstruktur. Ausserdem kann ein Synchronisationstaktgeber vorgesehen sein, von dem sternförmig Datenleitungen zu den Antriebsteuerungen ausgehen.

Der Vorteil der Erfindung besteht darin, dass durch die übergreifende Synchronisation der lokalen Synchronisationstakte der Antriebsgruppen mittels einem globalen Synchronisationstakt und einer synchronen Sollwertdatenübertragung ein äusserst präziser Gleichlauf der Antriebsgruppen erreicht wird.

Ein weiterer Vorteil besteht in der hohen Verfügbarkeit und Flexibilität der dezentralen Struktur.

Das erfindungsgemässe Verfahren bzw. die erfindungsgemässe Vorrichtung wird vorzugsweise für Rotationsdruckmaschinen eingesetzt.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein Blockschema eines erfindungsgemässen Antriebssystems;
- **Fig. 2a-b2**: Verschiedene Übertragungsarten des Synchronisationstaktes und der Sollwertdaten;
- **Fig. 3 - 9**: Verschiedene Topologien des Antriebsnetzes;
- **Fig. 10**: Die Aufteilung des Synchronisationstaktes in einen Haupt- und mehrere Nebentakte;
- **Fig. 11**: Ein Diagramm mit der zeitlichen Abfolge der Bearbeitung von Datensätzen bei einer einstufigen Leitachsenhierarchie;
- **Fig. 12**: Ein Diagramm mit der zeitlichen Abfolge der Bearbeitung von Datensätzen bei einer zweistufigen Leitachsenhierarchie.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

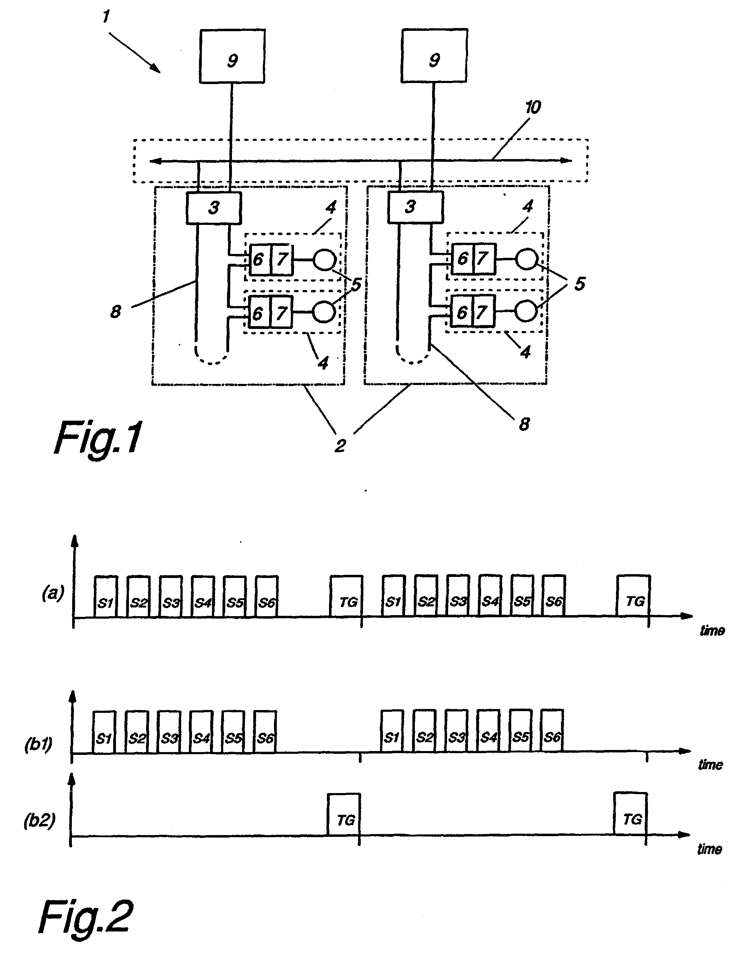

Figur 1 zeigt ein Blockschema eines erfindungsgemässen Antriebssystems 1. Mit 2 sind Antriebsgruppen bezeichnet. Diese umfassen eine Antriebssteuerung 3 und mindestens einen Antrieb 4. Die Antriebe 4 ihrerseits umfassen mindestens einen Motor 5, der von einem Antriebsregler 6 und über eine dazwischen geschaltete Leistungselektronikschaltung 7 angesteuert wird. Die Motoren 5 können beispielsweise die Druck- und Gegendruckzylinder einer Rotationsdruckmaschine antreiben. Die Antriebsregler 6 einer Antriebsgruppe 2 sind untereinander und mit der Antriebssteuerung 3 über einen Antriebsbus 8 verbunden. Die Antriebssteuerungen können zusätzlich mit übergeordneten Steuereinheiten 9 verbunden sein. Im Rahmen der Erfindung sind die Antriebssteuerungen 3 über ein eigenes Antriebsdatennetz 10 verbunden.

Das Antriebsdatennetz bildet das Rückgrat der Synchronisation und der Datenkommunikation des Antriebssystems. Es ermöglicht einen genauen Gleichlauf von Antrieben, die zu verschiedenen Antriebsgruppen gehören, indem es eine übergreifende Synchronisation und eine synchrone Sollwertdatenübertragung zwischen den Antriebsgruppen sicherstellt. Dies wird durch die genaue Synchronisation der Antriebsgruppen durch Übertragung eines globalen Synchronisationstaktes über das Antriebsdatennetz erreicht. Die Antriebssteuerungen der einzelnen Antriebsgruppen gleichen ihre lokalen Synchronisationstakte der einzelnen Antriebsgruppen - mit hoher Genauigkeit - an den globalen Synchronisationstakt an. Die lokalen Synchronisationstakte auf den einzelnen Antriebsbussen sind somit - mit hoher Genauigkeit - synchron zum übergeordneten, globalen Synchronisationstakt auf dem Antriebsdatennetz.

Auf diese Weise wird ein systemweiter Synchronisationstakt für das gesamte Antriebssystem bereitgestellt, der in allen Antriebsgruppen über die lokalen Antriebsbusse zu allen einzelnen Antrieben übermittelt wird. Damit werden alle einzelnen Antriebe im gesamten Antriebssystem genau synchronisiert.

Um alle Antriebe im synchronen Gleichlauf zu betreiben, müssen die einzelnen Antriebe auch synchron (zeitgleich) mit Sollwertdaten beliefert werden. Dies gilt besonders im bevorzugten Fall von Positionssollwerten. Hohe Anforderungen an den synchronen Gleichlauf der Antriebe stellen entsprechend hohe Anforderungen an die Synchronität der Datenübertragung von Sollwerten. Es genügt nicht, dass die Antriebe über einen gemeinsamen Takt untereinander synchronisiert werden, die Belieferung mit Sollwertdaten, d.h. besonders mit Positionssollwerten jedoch unkoordiniert zum Takt erfolgt, da durch unterschiedliche Übertragungszeiten oder Lieferzeiten der Sollwertdaten die Konsistenz der Information nicht mehr gegeben wäre.

Bei der Übertragung von Positionssollwerten ist eine exakte zeitliche Konsistenz (Gleichzeitigkeit) der Datenlieferung unverzichtbar (siehe auch Figuren 2a, b1, b2).

Die Gültigkeit von Positionssollwerten bezieht sich stets auf ganz bestimmte Zeitpunkte. Zum Beispiel: Zum Zeitpunkt t1 soll sich Antrieb A auf Position a1 und Antrieb B auf Position b1 befinden. Zum nächsten Zeitpunkt t2, d.h. beim nächsten Takt, soll sich Antrieb A auf der Position a2 und Antrieb B auf der Position b2 befinden.

### Ein Beispiel:

Zwei Antriebe A und B einer Rotationsdruckmaschine treiben 2 Druckzylinder mit unterschiedlicher Farbe an, welche eine Papierbahn mit einer Geschwindigkeit von 10m/s bedrucken. Damit ein guter Mehrfarbendruck entsteht, müssen die 2 verschiedenfarbigen Druckbilder stets exakt zueinander positioniert sein. Die beiden Antriebe A und B sind mit Positionsreglern ausgestattet, die über einen gemeinsamen Takt exakt synchron (d.h. gleichzeitig, mit einem maximalen Synchronisierungsfehler von 1µs) ihre Positionsregelung mit Zykluszeiten von 250µs ausführen. Von einem Regelungszyklus zum nächsten, d.h. in 250µs, hat sich das Papier um 2500µm = 2,5mm bewegt. Wenn der Antrieb B einen Positionssollwert b1 fehlerhaft um einen Regelungszyklus verspätet, zum Zeitpunkt t2, erhielte, so würde sich dies in einer fehlerhaften Druckbildabweichung von 2,5mm bemerkbar machen.

Die Übertragung der Positionssollwerte muss sich also stets im Gleichschritt mit den Synchronisationstakten befinden.

Die Sollwertdatenübertragung muss deshalb in das zeitsynchron arbeitende Antriebsdatennetz eingebunden werden. Die Übertragung von Sollwertdaten zwischen den Antriebssteuerungen über das Antriebsdatennetz wird deshalb mit der Übertragung des globalen Synchronisationstaktes koordiniert.

Die im Antriebsdatennetz übertragenen Sollwertdaten sind bevorzugt Positionssollwerte übergeordneter Leitachsen. Diese Leitachsen existieren nicht unbedingt körperlich, sondern nur rechnerisch. Man spricht dannvon virtuellen Leitachsen.

Die Positionswerte von Leitachsen bilden die Basis für Sollwertberechnungen in den Antriebssteuerungen für die einzelnen Antriebe in den verschiedenen Antriebsgruppen. Die Antriebssteuerungen leiten aus der Position von Leitachsen die Sollpositionen von Folgeachsen (d.h. einzelner Antriebe) ab, deren Position sich an bestimmten Leitachsen orientieren soll. Beliebige Antriebe in verschiedenen Antriebsgruppen können sich so an einer vorgegebenen Leitachse orientieren - und im genauen, synchronen Gleichlauf mit der Leitachse betrieben werden.

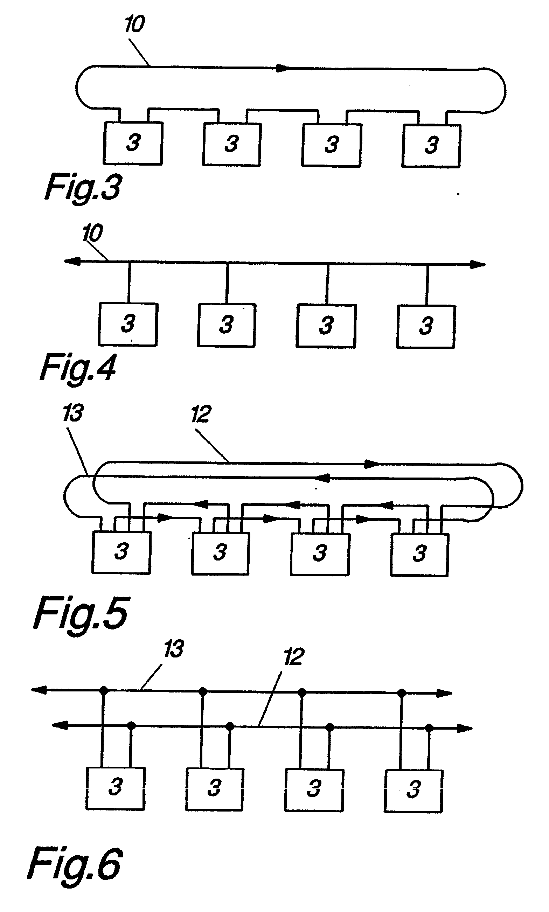

Die Figuren 3 bis 9 zeigen verschiedene Konzepte für das Antriebsdatennetz 10.

Das Antriebsdatennetz soll eine fehlerfreie Übertragung des globalen Synchronisationstaktes an die Antriebssteuerungen bereitstellen. Fehlerfrei bedeutet dabei, dass der Synchronisationstakt ein möglichst geringes zeitliches Zittern (Jitter) aufweist, wie es durch zeitdiskrete Signalabtastung oder variable Signallaufzeiten entsteht.

Das Antriebsdatennetz soll eine synchrone Sollwertdatenübertragung zwischen den Antriebssteuerungen ermöglichen. Jede Antriebssteuerung muss Sollwertdaten an alle anderen Antriebssteuerungen im Antriebssystem senden können. Es wird also eine synchrone Datenkommunikation benötigt, die den Datenaustausch zwischen beliebigen Teilnehmern ermöglicht und das Senden von Datentelegrammen an mehrere Teilnehmer (Multicast) oder an alle Teilnehmer erlaubt (Broadcast).

Da das Antriebsdatennetz das Rückgrad der Kommunikation im Antriebssystem darstellt, sind hohe Anforderungen an seine Zuverlässigkeit und Verfügbarkeit gestellt. Besonders in grossen Antriebssystemen mit einer Vielzahl von Antrieben sind redundante Ausführungen des Antriebsdatennetzes gefordert.

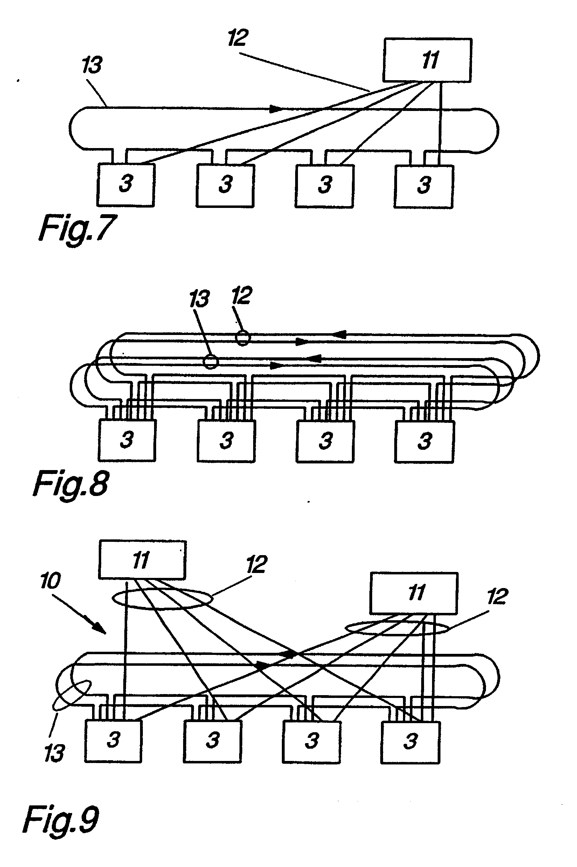

Folgende Konzepte sind realisierbar:
A) Gemeinsame oder getrennte Übertragung von Takt und Daten:
   (A1) Übertragung von Synchronisationstakt und Sollwertdaten über dieselben Leitungen, (Figuren 3 u. 4)
   (A2) Übertragung von Synchronisationstakt und Sollwertdaten über getrennte Leitungen (Figuren 5 u. 6).
B) Optoelektronische oder elektronische Datenübertragung:
   (B1) Optoelektronische Signalübertragung, bevorzugt über Glasfaser,
   (B2) Elektronische Signalübertragung, bevorzugt über Koaxialkabel.
C) Topologie der Verbindungsleitungen:
   (C1) Ringförmige Verbindungsleitungen, bevorzugt für Glasfaser, (Figuren 3,5,7,8,9)
   (C2) Busförmige Verbindungsleitungen, bevorzugt für Koaxialkabel (Figuren 4,6),
   (C3) Sternförmige Verbindungsleitungen, bevorzugt für Glasfaser (Figuren 7 und 9),
D) Redundanz der Verbindungen:
   (D1) Einfache Verbindungen, ohne strukturelle Redundanz,
   (D2) Redundante Verbindungen.

Figur 3 zeigt ein Antriebsdatennetz 10 mit ringförmiger Verbindung der Antriebssteuerungen 3, über die sowohl das globale Synchronisationstakt als auch die Sollwertdaten übertragen werden (siehe auch Figur 2(a)). Diese Lösung eignet sich besonders zur optischen Signalübertragung über Glasfaser. Ein besonderer Vorteil dieser Lösung liegt in der Unempfindlichkeit der Glasfaserverbindung gegenüber elektromagnetischen Störungen.

Figur 4 zeigt eine Variante mit einem einfachen, busförmigen Antriebsdatennetz 10. Auch hier werden Sollwertdaten und das Synchronisationstakt über dieselbe Leitung übertragen. Diese Lösung eignet sich besonders zur elektronischen Signalübertragung über Koaxialkabel. Ein besonderer Vorteil dieser Lösung liegt in der hohen Synchronisationsgenauigkeit durch geringen Abtastfehler (einmalige Signalabtastung zwischen Sender und Empfänger).

Figur 5 zeigt eine Variante, bei der das Antriebsdatennetz aus einem ersten Teilnetz 12 und einem zweiten Teilnetz 13 besteht. Über beide Teilnetze werden dieselben Daten, d.h. Sollwertdaten und Synchronisationstakte übertragen. Aufgrund ihrer ringförmigen Struktur eignet sich diese Lösung ebenfalls besonders zur optischen Signalübertragung über Glasfaser. Ein besonderer Vorteil dieser Lösung liegt in der hohen Verfügbarkeit durch grosse Unempfindlichkeit gegenüber elektromagnetischen Störungen und gegenüber Beschädigungen der Glasfaserkabel. Die Übertragungsrichtung auf den beiden redundanten Teilnetzen oder Ringen 12 und 13 ist vorzugsweise gegenläufig.

Jeder Teilnehmer (Antriebssteuerung 3) sendet seine Daten stets auf beiden gegenläufigen Ringen und wählt beim Empfang eine der beiden Leitungen aus. Wenn ein Teilnehmer auf einer Ringleitung während eine bestimmten, kurzen Zeitspanne keine Daten erhält, so gibt er eine Störmeldung ab und schaltet zum Empfang auf die zweite Ringleitung um. Auf dem einen Ring erfolgt die Datenübertragung im Uhrzeigersinn auf dem zweiten Ring entgegen dem Uhrzeigersinn. Auch bei Durchschneiden beider Glasfaserringe zwischen zwei Teilnehmern (Antriebssteuerungen) ist weiterhin eine Datenkommunikation zwischen allen Teilnehmern möglich.

Figur 6 zeigt eine weitere Variante, bei der zwei busförmige Teilnetze 12 und 13 vorgesehen sind. Über beide Teilnetze werden wiederum sowohl Sollwertdaten als auch Synchronisationstakte übermittelt. Aufgrund der redundanten Busstruktur eignet sich diese Lösung besonders zur elektronischen Signalübertragung über Koaxialkabel. Ein besonderer Vorteil dieser Lösung liegt in der hohen Synchronisationsgenauigkeit durch geringen Abtastfehler (einmalige Signalabtastung zwischen Sender und Empfänger) und in der hohen Verfügbarkeit durch Tolerieren des Ausfalls einer Busleitung.

Jeder Teilnehmer (Antriebssteuerung) sendet seine Daten stets auf beiden Busleitungen und wählt beim Empfang eine der beiden Busleitungen aus. Wenn ein Teilnehmer auf einer Busleitung während einer bestimmten, kurzen Zeitspanne keine Daten erhält, so gibt er eine Störmeldung ab und schaltet zum Empfang auf die zweite Busleitung um. Bei Beschädigung der einen Busleitung kann die Datenübertragung weiterhin ungestört über die zweite Busleitung erfolgen.

Die doppelt geführten Leitungen in Form der Teilnetze 12 und 13 nach den Figuren 5 und 6 kann auch zur getrennten Übertragung von Sollwertdaten und des Synchronisationstaktes verwendet werden (siehe auch Figuren 2(b) und 2(c)). Ein besonderer Vorteil der getrennten Leitungen für die Übertragung von Synchronisationstakt und Sollwertdaten liegt in der Spezialisierungsmöglichkeit des Übertragungssystems für den globalen Synchronisationstakt (Signalformen, Abtasten, Sende- und Empfangsschaltungen), so dass ein sehr kleiner Synchronisationsfehler entsteht.

Eine weitere Variante ist in Figur 7 dargestellt. Hier ist ein Teilnetz 13 zur Übertragung von Sollwertdaten ringförmig ausgebildet, während eine sternförmige Verbindung 12 zur Übertragung des Synchronisationstaktes zu einem globalen Synchronisationstaktgeber 11 vorgesehen ist (siehe auch Figuren 2(b1) und 2(b2)). Ein besonderer Vorteil der sternförmigen Übertragung des Synchronisationstaktes liegt in der hohen Synchronisationsgenauigkeit durch geringen Abtastfehler (einmalige Signalabtastung zwischen Sender und Empfänger).

Nach Figur 8 können schliesslich auch die für Sollwertdaten und Synchronisationstakte geeigneten Teilnetze redundant ausgeführt werden. Diese Lösung vereinigt die Vorzüge der hohen Verfügbarkeit durch Redundanz mit denen der guten Synchronisationsgenauigkeit durch getrennte Übertragung von Synchronisationstakt und Sollwertdaten.

Dasselbe lässt sich auch für eine sternförmige Übertragung des Synchronisationstaktes realisieren. Zu diesem Zwecke müssen auch die Synchronisationstaktgeber 11 redundant ausgeführt werden (Figur 9). Diese Lösung vereinigt die Vorzüge der hohen Verfügbarkeit durch Redundanz mit denen der guten Synchronisationsgenauigkeit durch getrennte Übertragung von Synchronisationstakt und Sollwertdaten.

Jede Antriebssteuerung ist bevorzugt mit einem Taktgenerator zur Erzeugung des globalen Synchronisationstaktes ausgerüstet. Durch eine bestimmte Logik wird definiert, welche Antriebssteuerung den Vortritt beim Senden des globalen Synchronisationstaktes hat. Bei allen nachrangigen Teilnehmern am Antriebsdatennetz wird dann auf den gesendeten Synchronisationstakt gehört und die dortigen Taktgeneratoren senden keinen Synchronisationstakt.

Die Vortrittsregelung erfolgt bevorzugt so, dass ein bestimmter Teilnehmer im Normalfall stets den globalen Synchronisationstakt sendet. Bei Ausfall (Schweigen) des erstrangigen Teilnehmers springt ein bestimmter anderer Teilnehmer ein, der auf Rang 2 in der Vortrittsliste programmiert ist. Bei Ausfall (Schweigen) des zweitrangigen Teilnehmers übernimmt ein 3. Teilnehmer das Senden des globalen Synchronisationstakt, u.s.w.

Eine andere bevorzugte Lösung basiert auf dem regelmässigen Durchlaufen der Vorrangliste, so dass jeder Teilnehmer jeweils für eine bestimmte, feste Zeitdauer den globalen Synchronisationstakt sendet und dann an den nächsten Teilnehmer abgibt, der seinerseits für eine bestimmte, feste Zeitdauer den Synchronisationstakt sendet, u.s.w. Nachdem der letzte Teilnehmer der Vorrangliste eine bestimmte, feste Zeit den globalen Synchronisationstakt gesendet hat, übernimmt wieder der erstrangige Teilnehmer das Senden des Takts, u.s.w.

Die Taktgeneratoren für den globalen Synchronisationstakt können im Sonderfall auch ausserhalb der Antriebssteuerungen in besonderen Stationen angeordnet sein. Dies ist besonders bei kostengünstigen Lösungen sinnvoll, die sich auf einen oder zwei Taktgeneratoren beschränken. In diesem Fall brauchen die Antriebssteuerungen nicht mit eigenen Taktgeneratoren für den globalen Takt ausgerüstet zu werden.

Der globale Synchronisationstakt T_{G} erfolgt vorzugsweise nach dem SERCOS-Standard (Figur 2a). Die Taktperiode beträgt bevorzugt 62µs, 125µs, 250µs, 500µs, 1ms, 2ms, 3ms,... 63ms, 64ms oder 65ms. Zykluszeiten von mehreren ms sind - gemessen an den schnellen Verarbeitungszeiten und Datenübertragungszeiten eines digitalen Antriebssystems - ein relativ langer zeitlicher Abstand.

Um ein zeitliches Auseinanderdriften der einzelnen Antriebssteuerungen (auf Grund der Ungenauigkeiten der lokalen Taktgeneratoren / Quarze) während der Datenübertragungszyklen zu verringern, ist es sinnvoll, die globale Synchronisation im Antriebsdatennetz durch zusätzliche Nebentakte in kleineren Zeitabständen zu verbessern.

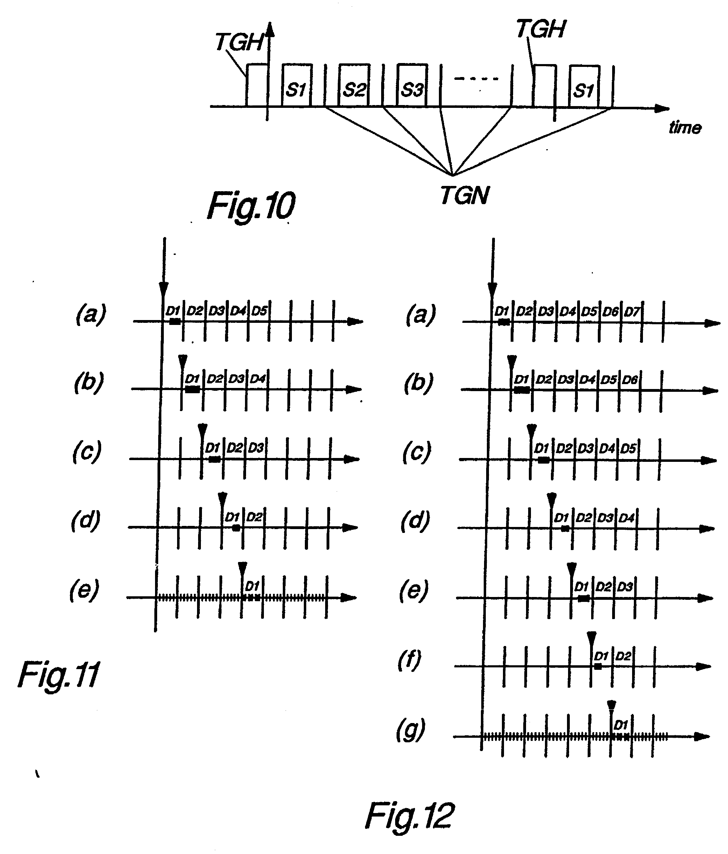

Der globale Synchronisationstakt T_{G} wird deshalb bevorzugt durch eine Takthierarchie realisiert, die aus einem Haupttakt T_{GH} und untergeordneten Nebentakten T_{GN} besteht (siehe Figur 10).

Eine zweistufige Takthierarchie besteht beispielsweise aus einem Haupttakt T_{GH}, der im festen Abstand von 4ms gesendet wird und 15 Nebentakten T_{GN}, die jeweils zwischen 2 Haupttakten im festen Zeitabstand von 250µs gesendet werden. Es sind aber auch mehrstufige Takthierarchien anwendbar (3-stufige, 4-stufige,...).

Die Übertragung der Sollwertdaten (S₁...S_{N}) über das Antriebsdatennetz erfolgt bevorzugt zeitgesteuert und zyklisch mit festen Sendezeitfenstern für jeden Teilnehmer (Time-Division Multiple-Access) (siehe Figuren 2 und 10).

Die zeitliche Steuerung wird durch den globalen Synchronisationstakt T_{G} gegeben. Der Datenübertragungszyklus, in dem alle Antriebssteuerungen im Antriebsdatennetz Gelegenheit zum Senden erhalten, orientiert sich an der Zykluszeit z.B. des SERCOS-Standard und liegt bevorzugt in der Grössenordnung von 1ms. Jede Antriebssteuerung (jeder Teilnehmer) hat ein oder mehrere Zeitfenster in jedem Übertragungszyklus, in dem sie ihre Telegramme und die darin enthaltenen Sollwertdaten senden kann.

Die zeitgesteuerte Datenübertragung ist der Forderung angemessen, dass ein kontinuierlicher Datenstrom von Sollwertdaten zu übertragen ist, der sich stets im Gleichschritt mit dem globalen Synchronisationstakt befinden muss. Die zeitgesteuerte, zyklische Datenübertragung im Time-Division Multiple-Access wird demzufolge bevorzugt kombiniert mit der Verwendung einer Takthierarchie für den globalen Synchronisationstakt, bestehend aus Haupttakt T_{GH} und Nebentakten T_{GN}.

Die Sollwertdatenübertragungen über das Antriebsdatennetz, die Sollwertberechnungen in den Antriebssteuerungen, die Sollwertdatenübertragungen in den Antriebsbussen und die Regelungen in den Antrieben erfolgen bevorzugt synchron und zyklisch (im Pipelining).

Das gesamte Antriebssystem arbeitet zyklisch und synchron. Dies gilt für die übergeordnete Datenübertragung über das Antriebsdatennetz, die Sollwertberechnungen in den Antriebssteuerungen der einzelnen Antriebsgruppen, die Datenübertragungen in den Antriebsbussen der einzelnen Antriebsgruppen und die Regelungsvorgänge in den Antriebsreglern der einzelnen Antriebe. Die Schritte in der Sollwertberechnung und Sollwertdatenübertragung werden im Pipelining ausgeführt - und dabei über den globalen Takt synchronisiert (siehe Figuren 11 und 12).

Jede einzelne Funktionseinheit führt ihre Funktion zyklisch aus. Die Datenübertragungen im Antriebsdatennetz, die Sollwertberechnungen in den einzelnen Antriebssteuerungen, die Datenübertragungen in den einzelnen Antriebsbussen und die Positionsregelungen in den einzelnen Antrieben erfolgen jeweils zyklisch und sind - über den systemweiten Synchronisationstakt - miteinander synchronisiert (im Gleichschritt).

Im folgenden sind die Schritte der Sollwertberechnung und Sollwertdatenübertragung für eine einstufige Leitachsenhierarchie angegeben (Figur 11):
(a) Berechnung von Leitachsensollwerten in Antriebssteuerungen
(b) Datenübertragung der Leitachsensollwerte über das Antriebsdatennetz
(c) Berechnung von Folgeachsensollwerten in den Antriebssteuerungen
(d) Datenübertragung von Folgeachsensollwerten über die Antriebsbusse
(e) Durchführung von Positionsregelungen in den einzelnen Antrieben
Die Schritte (d) und (e) entsprechen dabei dem bekannten Vorgehen in Antriebssystemen mit einem Antriebsbus nach dem eingangs erwähnten SERCOS-Standard.

Bei einer zweistufigen Leitachsenhierarchie wird der Ablauf entsprechend erweitert. Im folgenden sind die Schritte der Sollwertberechnung und Datenübertragung für eine zweistufige Leitachsenhierarchie angegeben (Figur 12):
(a) Berechnung von Hauptleitachsensollwerten in Antriebssteuerungen
(b) Datenübertragung der Hauptleitachsensollwerte über das Antriebsdatennetz
(c) Berechnung von Leitachsensollwerten in den Antriebssteuerungen
(d) Datenübertragung von Leitachsensollwerten über das Antriebsdatennetz
(e) Berechnung von Folgeachsensollwerten in den Antriebssteuerungen
(f) Datenübertragung von Folgeachsensollwerten über die Antriebsbusse
(g) Durchführung von Positionsregelungen in den einzelnen Antrieben
Die Schritte (f) und (g) entsprechen wiederum dem bekannten Vorgehen in Antriebssystemen mit einem Antriebsbus nach dem SERCOS-Standard.

Im bevorzugten Fall sind die Zykluszeiten der Datenübertragung im Antriebsdatennetz, der Sollwertberechnung in den Antriebssteuerungen und der Datenübertragung in den Antriebsbussen gleich.

Die Zykluszeiten für die einzelnen Verarbeitungs- und Datenübertragungsschritte in den Antriebssteuerungen und im Antriebsdatennetz sind vorzugsweise an die Zykluszeiten des SERCOS-Standard angepasst - und liegen deshalb vorzugsweise in der Grössenordnung von 1ms (ca. 100µs bis ca. 10ms).

Es ist bekannt, dass die Zykluszeiten der Antriebsregler vorzugsweise kürzer sind als die Zykluszeiten der Datenübertragung auf dem Antriebsbus. Durch die kürzeren Zykluszeiten haben die Antriebsregler eine bessere Regeldynamik und eine bessere dynamische Regelgenauigkeit. Die Verarbeitungszyklen in den einzelnen Antriebsreglern liegen typisch im Bereich von 250µs.

Die Antriebsregler führen deshalb - bekanntermassen - eine Interpolation der von der Antriebssteuerung vorgegebenen Sollwerte durch, so dass Zwischenwerte für die Regelung vorliegen. Zum Beispiel bei einer Zykluszeit der Sollwertübertragung von 1ms und einer Zykluszeit für die Lageregelung im Antriebsregler von 250µs werden jeweils 3 Zwischenwerte des Positionssollwertes durch Interpolation im Antriebsregler ermittelt.

Bei der Funktionsausführung im Antriebssystem arbeiten die einzelnen Funktionseinheiten - Antriebssteuerungen, Antriebsdatennetz, Antriebsbusse und Antriebsregler - jeweils nacheinander an den Daten eines bestimmten Datensatzes. Die Daten eines Datensatzes werden so schrittweise nach dem vorgegebenen Synchronisationstakt durch die Pipeline geschoben.

### Beispiel mit einstufiger Leitachsenhierarchie (Figur 11):

Im Taktzyklus 1 (Fig. 11(a)) berechnet die Antriebssteuerung A die Leitachsensollwerte für den Datensatz D1. Im Taktzyklus 2 (Fig. 11(b)) werden die Leitachsensollwerte des Datensatz D1 über das Antriebsdatennetz übertragen. Im Taktzyklus 3 (Fig. 11(c)) berechnen die Antriebssteuerungen A, B, C aus den gelieferten Leitachsensollwerten die entsprechenden Folgeachsensollwerte für den Datensatz D1. Im Taktzyklus 4 (Fig. 11(d)) werden die Folgeachsensollwerte des Datensatzes D1 über die Antriebsbusse übertragen.

Die Durchlaufzeit durch die Pipeline - bis zur Anlieferung der Sollwerte an die Antriebsregler - beträgt, zum Beispiel, bei einer einstufigen Leitachsenhierarchie 4 Zykluszeiten (Figur 11) und bei der zweistufigen Leitachsenhierarchie 6 Zykluszeiten. (Figur 12) .

Von Taktzyklus zu Taktzyklus bearbeitet eine Funktionseinheit aufeinanderfolgende Datensätze. Zum Beispiel (Figur 11) überträgt das Antriebsdatennetz im Zyklus 2 die Leitachsensollwerte des Datensatzes D1 und im folgenden Zyklus 3 die Leitachsensollwerte des Datensatzes D2.

Zu einem Zeitpunkt, d.h. in einem Takt, arbeiten die verschiedenen Funktionseinheiten der Pipeline an verschiedenen Datensätzen.

Zum Beispiel (Figur 11): Im Taktzyklus 4 (Fig. 11(d)) berechnet die Antriebssteuerung A die Leitachsensollwerte des Datensatzes D4, das Antriebsdatennetz überträgt die Leitachsensollwerte des Datensatzes D3, die Antriebssteuerungen A, B und C berechnen die Folgeachsensollwerte des Datensatzes D2 und über die Antriebsbusse werden die Folgeachsensollwerte des Datensatzes D1 übertragen.

Aus dem Beispiel wird deutlich, dass Antriebssteuerungen in einem Zyklus Aufgaben von verschiedenen Stufen der Pipeline ausführen können, nämlich die Berechnung von Leitachsensollwerten und von Folgeachsensollwerten.

Zum Beispiel (Figur 11): Die Antriebssteuerung A berechnet im Zyklus 4 (Fig. 11(d)) die Leitachsensollwerte des Datensatzes D4 und die Folgeachsensollwerte des Datensatzes D2.

Es kann unter Umständen sinnvoll sein, die angegebene Schrittfolge der Sollwertberechnung und Sollwertdatenübertragung im Pipelining durch Zusammenfassung mehrerer Schritte zu jeweils einem Bearbeitungsschritt zu vereinfachen und zu verkürzen.

So kann es vorteilhaft sein, jeweils die Sollwertberechnung und - übertragung (einer Hierarchieebene) zu einem Bearbeitungsschritt in der Pipeline zu verschmelzen. Beispielsweise bei einer zweistufigen Leitachsenhierarchie (Figur 12) können so die Schritte (a) und (b) zu einem Schritt I, die Schritte (c) und (d) zu einem Schritt II und die Schritte (e) und (f) zu einem Schritt III zusammengefasst werden.

Auf diese Weise werden einzelne Bearbeitungsschritte in der Pipeline umfangreicher, aber die Anzahl der Bearbeitungsschritte in der Pipeline wird verringert.

Bei der Berechnung der Leitachsenpositionen und der Folgeachsenpositionen in den Antriebssteuerungen und bei der Datenübertragung über das Antriebsdatennetz und über die Antriebsbusse wird die zeitliche Konsistenz (Gleichzeitigkeit) der Sollwertdaten für die Einzelantriebe sichergestellt (siehe Figur 11).

Es ist entscheidend für die korrekte Funktion des Antriebssystems, dass alle Antriebe, deren Position sich an einer gemeinsamen Leitachse (oder Hauptleitachse) orientiert, ihre Sollwertdaten synchron (gleichzeitig, im Gleichschritt, im gleichen Zyklus) erhalten.

Die zeitliche Konsistenz der Lieferung von Sollwertdaten an die im Gleichlauf betriebenen Antriebe muss stets eingehalten werden. Zeitliche Konsistenz bedeutet, dass alle im Gleichlauf betriebenen Antriebe die Daten eines bestimmten Datensatzes gleichzeitig, d.h. im gleichen Zyklus, erhalten.

Im Beispiel der Figur 11 erhalten die einzelnen Antriebsregler im Zyklus 5 die Folgeachsensollwerte des Datensatzes D1, im Zyklus 6 die Folgeachsensollwerte des Datensatzes D2, usw..

Aus der Forderung nach strenger Zeitkonsistenz folgt, dass der feste Rhythmus des Pipelining immer konsequent einzuhalten ist.

Zeitliche Konsistenz der Lieferung von Sollwertdaten bedeutet beispielsweise, dass die Sollwertdaten für einen einzelnen Antrieb, der sich direkt an der (virtuellen) Leitachse orientiert, gleichzeitig, d.h. im gleichen Zyklus, mit den Sollwertdaten für alle anderen Antriebe (Folgeachsen), welche sich an der gleichen Leitachse orientieren, an den Antrieb zu liefern sind.

Obwohl bei dem Antrieb, der sich die direkt an der (virtuellen) Leitachse orientiert, eine Berechnung von Folgeachsensollwerten nicht erforderlich ist, ist es nicht sinnvoll die Sollwertdaten bereits früher (sofort) an diesen Antrieb zu liefern, da dies zu einer zeitlichen Inkonsistenz führen würde.

Bei einer einstufigen Leitachsenhierarchie sind also die Sollwertdaten des Datensatzes D1 für einen Antrieb, der sich direkt an der (virtuellen) Leitachse orientiert, im Gleichschritt mit den Sollwertdaten der anderen Antriebe (Folgeachsen), die sich an der gleichen Leitachse orientieren, erst im Zyklus 4 über den Antriebsbus zu liefern. Eine frühere Lieferung der Sollwertdaten des Datensatzes D1 an den Antrieb, der sich direkt an der (virtuellen) Leitachse orientiert, z.B. im Zyklus 2, wäre fehlerhaft.

Entsprechendes gilt bei einer mehrstufigen Leitachsenhierarchie für einzelne Antriebe, die sich direkt an einer (virtuellen) Hauptleitachse orientieren (Figur 12). Obwohl eine Berechnung von Leitachsensollwerten und Folgeachsensollwerten für einen Antrieb, der sich direkt an der Hauptleitachse orientiert, nicht erforderlich ist, ist eine frühere Lieferung der Sollwertdaten über den Antriebsbus an diesen Antrieb nicht sinnvoll.

Bei einer zweistufigen Leitachsenhierarchie (Figur 12) sind die Sollwerte des Datensatzes D1 für einen Antrieb, der sich direkt an der (virtuellen) Hauptleitachse orientiert, im Gleichschritt mit den Sollwerten für alle anderen Antriebe (Folgeachsen), welche sich an der gleichen Hauptleitachse orientieren, d.h. im Zyklus 6, über den Antriebsbus an den Antrieb zu liefern.

Die Forderung nach zeitlicher Konsistenz der Lieferung der Sollwertdaten an die einzelnen Antriebe ist auch bezüglich der Sollwertdatenübertragungen stets einzuhalten. Zum Beispiel (Figur 11) berechnen die Antriebssteuerungen A, B und C im Zyklus 3 die Folgeachsensollwerte des Datensatzes D1. Die Folgeachsensollwerte D1 werden aus den Leitachsensollwerten D1 berechnet.

Da die Leitachsensollwerte in der Antriebssteuerung A errechnet werden, könnte die Antriebssteuerung A bereits im Zyklus 2 die Folgeachsensollwerte D1 berechnen. Eine Datenübertragung der Leitachsensollwerte von A nach A über das Antriebsdatennetz ist ja nicht notwendig.

Die frühere Berechnung der Folgeachsensollwerte zum Datensatz D1 in der Antriebssteuerung A würde jedoch zu einer zeitlichen Inkonsistenz mit der Berechnung der Folgeachsensollwerte des Datensatzes D1 in den Antriebssteuerungen B und C führen, die erst im Zyklus 3 erfolgen kann.

Aus Gründen der zeitlichen Konsistenz der Daten, ist es deshalb sinnvoll, die Berechnung der Folgeachsensollwerte in der Antriebssteuerung A im Gleichschritt, d.h. im genau gleichen Zyklus, wie in den Antriebssteuerungen B und C durchzuführen - obwohl die Leitachsensollwerte in der Antriebssteuerung A bereits einen Zyklus früher vorliegen, da eine Datenübertragung über das Antriebsdatennetz (von A nach A) nicht notwendig ist.

Vorzugsweise berechnen die Antriebssteuerungen die Positionssollwerte für (virtuelle) Hauptleitachsen und (virtuelle) Leitachsen und berechnen aus Leitachsenpositionen die Position von Folgeachsen.

Die Berechnung der Positionssollwerte für die Leitachse erfolgt vorzugsweise durch Integration von Geschwindigkeitssollwerten, die von der übergeordneten Steuerung der Funktionseinheit geliefert werden (Leitachsenposition = Integral über Leitachsengeschwindigkeit).

Auf diese Weise wird die Position einer virtuellen (in der Realität nicht körperlich existierenden) Leitachse berechnet. Eine derartige virtuelle Leitachse hat den Vorteil, dass mechanische Ungenauigkeiten und Messfehler des Positionsgebers sowie Rauschprobleme des Signals vermieden werden.

Der Vorteil der Berechnung der Leitachsenposition durch die Antriebssteuerung liegt darin, dass die Vorgaben, typisch die gewünschte Leitachsengeschwindigkeit, von der übergeordneten Steuerung der Funktionseinheit bereitgestellt wird.

Die Position der Leitachse kann (in Sonderfällen) auch von einem Positionsgeber geliefert werden, der auf einer mechanischen Achse angebracht ist und die Position dieser Achse übermittelt.

Ein Beispiel für eine mechanische Leitachse in der Drucktechnik ist in der eingangs genannten Schrift DE 42 14 394 A1 angegeben. Dort orientiert sich die Position der einzeln angetriebenen Druckzylinder (Folgeachsen) direkt an der Position der Achse des Falzapparates (Leitachse).

Die Ableitung der Position der Folgeachse aus der Position einer (virtuellen) Leitachse besteht vorzugsweise aus der Berücksichtigung von Positionskorrekturwerten oder Geschwindigkeitskorrekturwerten.

Die Berechnung des Folgeachsensollwertes für einen einzelnen Antrieb besteht im einfachsten Fall aus der Addition des Leitachsensollwertes und eines für den einzelnen Antrieb spezifischen Positionskorrekturwertes (Folgeachsenposition = Leitachsenposition + Positionskorrektur).

Die gewünschte Positionskorrektur für den einzelnen Antrieb wird dabei von der übergeordneten Steuerung an die Antriebssteuerung übergeben. Die Position der Folgeachse wird dann um die vorgegebene Positionskorrektur von der Position der (virtuellen) Leitachse abweichen.

Der Positionskorrekturwert kann auch durch Integration eines Geschwindigkeitswertes (Geschwindigkeitskorrektur) gebildet werden. In diesem Fall wird die Geschwindigkeit der Folgeachse um die vorgegebene Geschwindigkeitskorrektur von der Geschwindigkeit der (virtuellen) Leitachse abweichen (Folgeachsengeschwindigkeit = Leitachsengeschwindigkeit + Geschwindigkeitskorrektur).

Die Geschwindigkeitskorrektur wird bevorzugt so gewählt, dass die Geschwindigkeitskorrektur für die Folgeachse proportional zur Geschwindigkeit der Leitachse ist. Der Geschwindigkeitskorrekturwert für die Folgeachse wird dabei durch Multiplikation der Leitachsengeschwindigkeit mit einem Übersetzungsverhältnis (Getriebefaktor) berechnet (Geschwindigkeitskorrektur = Leitachsengeschwindigkeit * Getriebefaktor).

Ein Getriebefaktor ist eine rationale Zahl, die durch Division zweier ganzer Zahlen (Zahnverhältnis zweier Zahnräder) gebildet wird, und das Übersetzungsverhältnis eines Getriebes beschreibt. Auf diese Weise wird die Funktion eines mechanischen Getriebes (Differentialgetriebes) nachgebildet.

Es kann Hierarchien von Leitachsen geben, so dass sich die Position einer oder mehrerer (virtueller) Leitachsen an einer (virtuellen) Hauptleitachse orientiert. Es können zu einem Zeitpunkt mehrere (virtuelle) Leitachsen und mehrere (virtuelle) Hauptleitachsen gleichzeitig existieren.

Falls in einem Antriebssystem zu einem Zeitpunkt mehrere (virtuelle) Leitachsen vorhanden sind, liefert eine Leitachse die Positionsreferenz für eine Anzahl von einzelnen Antrieben, die zu verschiedenen Antriebsgruppen gehören können.

In einem Antriebssystem kann es eine Hierarchie von (virtuellen) Leitachsen geben. Zum Beispiel kann es (virtuelle) Hauptleitachsen und (virtuelle) Leitachsen geben, so dass die Position mehrerer Leitachsen von der Position einer Hauptleitachse abgeleitet wird. Es kann zu einem Zeitpunkt mehrere Hauptleitachsen geben. Jede Hauptleitachse liefert dabei die Positionsreferenz für eine Anzahl Leitachsen.

Es sind auch mehrstufige Leitachsenhierarchien anwendbar (3-stufige, 4-stufige,...)

Die Vorgabe von Leitachsen (und Hauptleitachsen) und die Orientierung von Einzelantrieben an Leitachsen kann dynamisch erfolgen - nach den wechselnden Anforderungen flexibler Produktion in industriellen Produktionsanlagen.

Es können auf flexible Weise Produktionsgruppen gebildet werden, die mehrere Antriebe aus einer oder mehreren Antriebsgruppen umfassen, welche im genauen Gleichlauf betrieben werden können und sich dabei an der Position einer (virtuellen) Leitachse orientieren,

Es kann Hierarchien von Produktionsgruppen geben, so dass mehrere Produktionsgruppen zu einer Produktionshauptgruppe gehören und sich die Position der (virtuellen) Leitachsen an der Position einer (virtuellen) Hauptleitachse orientiert,

Es kann zu einem Zeitpunkt im Antriebssystem gleichzeitig mehrere Produktionsgruppen und mehrere Produktionshauptgruppen geben.

Eine Anzahl von Einzelantrieben kann für die Dauer eines Produktionslaufs, zu einer Produktionsgruppe zusammengeschaltet werden, indem sich die Einzelantriebe für die Dauer des Produktionslaufs an einer vorgegebenen (virtuellen) Leitachse orientieren. Nach Abschluss des Produktionslaufs können die Einzelantriebe in neu und anders konfigurierte Produktionsgruppen eingebunden werden.

Zu einem Zeitpunkt können im Antriebssystem mehrere Produktionsgruppen bestehen. Jede Produktionsgruppe besteht aus einer Anzahl von Antrieben, deren Position sich an einer bestimmten (virtuellen) Leitachse orientiert.

Mehrere Produktionsgruppen können für die Dauer eines Produktionslaufs zu einer Produktionshauptgruppe zusammengeschaltet werden, indem sich die Leitachsen der Produktionsgruppen für die Dauer des Produktionslaufs an einer vorgegebenen (virtuellen) Hauptleitachse orientieren. Nach Ablauf des Produktionslaufs können die Leitachsen und die Einzelantriebe in neu und unterschiedlich konfigurierte Produktionshauptgruppen und Produktionsgruppen eingebunden werden.

Zu einem Zeitpunkt können im Antriebssystem mehrere Produktionshauptgruppen bestehen. Jede Produktionshauptgruppe enthält eine Menge von (virtuellen) Leitachsen, deren Position sich an einer bestimmten (virtuellen) Hauptleitachse orientiert.

Es sind auch mehrstufige Hierarchien von Produktionsgruppen anwendbar (3-stufige, 4-stufige,...).

Die Bildung von Produktionsgruppen und Produktionshauptgruppen ist variabel und erfolgt jeweils für eine bestimmte Zeitdauer, z.B. für die Dauer eines bestimmten Produktionslaufs.

### Ein Beispiel:

In Zeitungsdruckereien wird in einem Produktionslauf eine bestimmte Produktionsmenge (Auflage) von gleichartigen Zeitungsprodukten (Zeitungsausgabe) hergestellt. Zeitungsausgaben haben einen bestimmten Umfang (Seitenzahl) und eine bestimmte Farbigkeit der einzelnen Seiten. Unterschiedliche Zeitungsausgaben können verschiedene Umfänge und verschiedenen Farbigkeiten der einzelnen Seiten haben.

Zeitungen werden durch Bedrucken mehrerer Papierbahnen hergestellt. Die Anzahl der Papierbahnen ist abhängig vom Umfang (Seitenzahl) der jeweiligen Zeitungsausgabe.

Jede Papierbahn wird durch mehrere Druckzylinder bedruckt. Die Anzahl der Druckzylinder, die verwendeten Druckzylinder und ihre Reihenfolge sind abhängig von der Farbigkeit der Zeitungsseiten, die sich auf der Vorderseite und der Rückseite der jeweiligen Papierbahn befinden.

Nach dem Bedrucken werden die Papierbahnen zusammengeführt und dann in einem Falzapparat zu fertigen Zeitungen gefaltet und geschnitten.

Im vorliegenden Beispiel wird jeder einzelne Druckzylinder durch einen einzelnen Antrieb bewegt. Eine Druckeinheit enthält 6 Druckzylinder mit jeweils eigenen Antrieb. Die Antriebe einer Druckeinheit bilden eine Antriebsgruppe (mit gemeinsamem Antriebsbus und gemeinsamer Antriebssteuerung). Der Falzapparat enthält 2 Falzzylinder. Die Antriebe des Falzapparats bilden eine eigene Antriebsgruppe (mit gemeinsamem Antriebsbus und gemeinsamer Antriebssteuerung).

In einem Produktionslauf P1 wird eine Produktionsmenge von 100'000 Exemplaren der Zeitungsausgabe Z1 hergestellt. Die Zeitungsausgabe Z1 wird durch Bedrucken von 2 Papierbahnen hergestellt. Die Papierbahn B1 wird von 8 Druckzylindern bedruckt, je 4 Druckzylinder mit unterschiedlichen Farben auf jeder Seite des Papiers (4/4). Die Papierbahn B2 wird von 4 Druckzylindern bedruckt, 2 auf der Vorderseite der Bahn, 2 auf der Rückseite (2/2). Nach dem Bedrucken werden die Papierbahnen deckungsgleich übereinander geführt und in einem Falzapparat gefalzt und geschnitten. Der Falzapparat enthält 2 Falzzylinder.

Für die Dauer des Produktionslaufes P1 gehören alle 14 an der Produktion beteiligten Antriebe zu einer Produktionshauptgruppe. Die Produktionshauptgruppe beinhaltet 2 Produktionsgruppen. Die auf die Bahn B1 wirkenden 8 Antriebe bilden eine Produktionsgruppe. Die auf die Bahn B2 wirkenden 4 Antriebe bilden eine zweite Produktionsgruppe. Die 2 Antriebe des Falzapparats gehören direkt zur Produktionshauptgruppe.

Die Position der (virtuellen) Hauptleitachse wird aus der gewünschten Produktionsgeschwindigkeit durch Integration errechnet. Aus der Position der Hauptleitachse wird die Position der (virtuellen) Leitachsen für die einzelnen Bahnen abgeleitet. Aus der Position der Leitachse für eine Bahn wird die Position der Folgeachsen, d.h. der Antriebe der einzelnen auf die Bahn wirkenden Druckzylinder, abgeleitet.

Um während des Produktionslaufs die Lage einer Papierbahn (in Transportrichtung) mit Bezug auf die andere Papierbahn zu verschieben, damit die Papierbahnen deckungsgleich übereinander liegen, muss nur der Positionskorrekturwert für die Leitachse der entsprechenden Produktionsgruppe geändert werden.

Um während des Produktionslaufs die Lage des Druckbildes eines Druckzylinders (in Transportrichtung) mit Bezug auf andere Druckzylinder, welche auf die gleiche Bahn wirken, zu verändern, wird der Positionskorrekturwert des entsprechenden Antriebs (Folgeachse) entsprechend geändert.

Gleichzeitig zum Produktionslauf P1 kann in der Zeitungsdruckerei eine andere Zeitungsausgabe Z2 mit unterschiedlichem Umfang und unterschiedlicher Farbigkeit und verschiedener Auflagenhöhe in einem Produktionslauf P2 gedruckt werden - unter Verwendung der von P1 nicht benötigten Druckzylinder. Nach Abschluss des Produktionslaufs P1 wird eine andere Zeitungsausgabe Z3 in einem weiteren Produktionslauf P3 gedruckt.

Auch für Einrichtearbeiten in der Produktionsanlage, z.B. zum Einziehen einer Papierbahn durch Druckeinheiten, können im Antriebssystem temporär entsprechende Produktionsgruppen gebildet werden. Die Bildung von Produktionsgruppen ist dynamisch in dem Sinne, dass während des Betriebs die Zuordnung von Folgeachsen zu Leitachsen geändert werden kann.

### Bezugszeichenliste

- 1: Antriebssystem
- 2: Antriebsgruppe
- 3: Antriebssteuerung
- 4: Antrieb
- 5: Motor
- 6: Antriebsregler
- 7: Leistungselektronikschaltung
- 8: Antriebsbus
- 9: Steuereinheit
- 10: Antriebsdatennetz
- 11: Synchronisationstaktgeber
- 12: Teilnetz 1
- 13: Teilnetz 2

- S₁..S_{N}: Sollwertdaten
- T_{G}: globaler Synchronisationstakt
- T_{L}: lokaler Synchronisationstakt
- T_{GH}: globaler Synchronisationshaupttakt
- T_{GN}: globaler Synchronisationsnebentakt
- D₁..D₇: Datensätze

## Patentansprüche

1. Verfahren zum Betrieb eines Antriebssystems (1), das mindestens zwei Antriebsgruppen (2) umfasst, wobei jede Antriebsgruppe (2) eine Antriebssteuerung (3) und mindestens einen Antrieb (4) umfasst, ein Antrieb mindestens einen Motor (5) und einen Antriebsregler (6) umfasst und die Antriebsregler einer Antriebsgruppe über einen Antriebsbus (8) untereinander und die Antriebssteuerungen (3) mit übergeordneten Steuereinheiten (9) verbunden sind, die Antriebssteuerungen (3) der Antriebsgruppen (2) über ein eigenes Antriebsdatennetz (10) untereinander verbunden sind und die Antriebsregler (6) einer Antriebsgruppe (2) mittels eines lokalen, insbesondere in der Antriebssteuerung (3) erzeugten, über den Antriebsbus (8) übertragenen Synchronisationstaktes (T_{L}) synchronisiert werden, und wobei die lokalen Synchronisationstakte (T_{L}) über das Antriebsdatennetz (10) an einen globalen Synchronisationstakt (T_{G}) angeglichen werden, für die Antriebsgruppen bestimmte Sollwertdaten (S₁...S_{N}) synchron nach Massgabe des globalen Synchronisationstaktes (T_{G}) zwischen den Antriebssteuerungen (3) der Antriebsgruppen (2) über das Antriebsdatennetz (10) übertragen werden, die über das Antriebsdatennetz (10) übertragenen Sollwertdaten (S₁...S_{N}) Sollwerte von Leitachsen und/oder Folgeachsen enthalten und die Sollwerte von Leitachsen und Folgeachsen zeitgleich berechnet und über das Antriebsdatennetz (10) übertragen werden,
**dadurch gekennzeichnet,**
**dass** mehrere Antriebsteuerungen (3) zur Bildung des globalen Synchronisationstaktes (T_{G}) ausgerüstet sind, und
**dass** mittels einer Vorrangsliste bestimmt wird, welche Antriebssteuerung zur Vorgabe des globalen Synchronisationstaktes (T_{G}) berechtigt ist.

2. Verfahren nach Anspruch 1, **dadurch gekennzeichnet, dass** die über das Antriebsdatennetz (10) übertragenen Sollwertdaten (S₁...S_{N}) Positionsangaben von Leitachsen, insbesondere von virtuellen Leitachsen, enthalten.

3. Verfahren nach Anspruch 1, **dadurch gekennzeichnet, dass** die Sollwerte (S₁...S_{N}) der Antriebsgruppen (2) nach Massgabe eines Positionswertes einer oder mehrerer virtueller Leitachsen in den Antriebssteuerungen (3) berechnet werden.

4. Verfahren nach einem der Ansprüche 1 bis 3, **dadurch gekennzeichnet, dass** die Vorrangsliste zyklisch durchlaufen wird, so dass der globale Synchronisationstakt (T_{G}) nacheinander für eine bestimmte Zeitspanne von verschiedenen Antriebssteuerungen (3) erzeugt wird.

5. Verfahren nach einem der Ansprüche 1 bis 3, **dadurch gekennzeichnet, dass** ein Synchronisationstaktgeber (11) in das Antriebsdatennetz eingebunden wird, der für die Erzeugung des globalen Synchronisationstaktes (T_{G}) geeignet ist.

6. Verfahren nach einem der Ansprüche 1 bis 5, **dadurch gekennzeichnet, dass** der globale Synchronisationstakt (T_{G}) in einen Haupttakt (T_{GH}) und mindestens einen Nebentakt (T_{GN}) unterteilt wird.

7. Verfahren nach einem der Ansprüche 1 bis 6, **dadurch gekennzeichnet, dass** die Sollwertdaten (S₁...S_{N}) in festen Zeitfenstern übertragen werden.

8. Verfahren nach Anspruch 3, **dadurch gekennzeichnet, dass** die Positionswerte der virtuellen Leitachsen durch Integration von vorgegebenen Geschwindigkeitssollwerten berechnet werden.

9. Verfahren nach Anspruch 1 **dadurch gekennzeichnet, dass** die Sollwertdaten (S₁...S_{N}) synchron und zyklisch über das Antriebsdatennetz (10) bzw. den Antriebsbus (8) übertragen werden, dass die Sollwerte synchron und zyklisch in den Antriebssteuerungen (3) berechnet werden und dass die Antriebe (4) synchron und zyklisch geregelt werden.

10. Verfahren nach Anspruch 1, **dadurch gekennzeichnet, dass** Hierarchien von Hauptleitachsen und Leitachsen gebildet werden, so dass die Sollwertdaten einer oder mehrerer Leitachsen aus den Sollwertdaten einer oder mehrerer Hauptleitachsen berechnet werden.

11. Verfahren nach Anspruch 1 und 10, **dadurch gekennzeichnet, dass** zu einem Zeitpunkt mehrere Leitachsen und/oder Hauptleitachsen gebildet werden.

12. Verfahren nach Anspruch 1, **dadurch gekennzeichnet, dass** durch eine variable Zuordnung von Antrieben (4) zu Leitachsen flexible Produktionsgruppen gebildet werden.

13. Vorrichtung zur Durchführung des Verfahrens nach Anspruch 1, mit mindestens zwei mit übergeordneten Steuereinheiten (9) verbundenen Antriebssteuerungen (3), die untereinander über ein eigenes Antriebsdatennetz (10) und mittels eines Antriebsbusses (8) jeweils mit mindestens einem Antrieb (4) verbunden sind, wobei der Antriebsbus (8) zur Synchronisation der Antriebe (4) dient, **dadurch gekennzeichnet, dass** mindestens zwei Antriebssteuerungen (3) einen Synchronisationstaktgeber (11) zur Bildung des globalen Synchronisationstaktes (T_{G}) umfassen und dass eine Vorrangsliste vorgesehen ist, mit Hilfe derer bestimmt wird, welche Antriebssteuerung (3) zur Vorgabe des globalen Synchronisationstaktes (T_{G}) berechtigt ist.

14. Vorrichtung nach Anspruch 13, **dadurch gekennzeichnet, dass** das Antriebsdatennetz (10) eine ring- oder busförmige Struktur aufweist.

15. Vorrichtung nach Anspruch 14, **dadurch gekennzeichnet, dass** das Antriebsdatennetz (10) ein erstes und ein zweites Teilnetz (12 bzw. 13) umfasst, wobei über das erste Teilnetz (12) der globale Synchronisationstakt (T_{G}) und über das zweite Teilnetz (13) Sollwertdaten (S₁...S_{N}) übertragen werden.

16. Vorrichtung nach Anspruch 14, **dadurch gekennzeichnet, dass** das Antriebsdatennetz ein erstes und ein zweites Teilnetz (12 bzw. 13) umfasst, wobei in das erste Teilnetz (12) ein globaler Synchronisationstaktgeber (11) eingebunden ist, von welchem sternförmig Datenleitungen zu den Antriebssteuerungen (3) für die Antriebe (4) führen, und das zweite Teilnetz (13) alle Antriebssteuerungen (3) verbindet und eine ring- oder busförmige Form aufweist.

17. Vorrichtung nach Anspruch 15 oder 16, **dadurch gekennzeichnet, dass** das Antriebsdatennetz (10) redundant ausgeführt ist.

18. Antriebssystem (1), das mindestens zwei Antriebsgruppen (2) umfasst, wobei jede Antriebsgruppe (2) eine Antriebssteuerung (3) und mindestens einen Antrieb (4) umfasst, wobei ein Antrieb mindestens einen Motor (5) und einen Antriebsregler (6) umfasst und die Antriebsregler einer Antriebsgruppe über einen Antriebsbus (8) untereinander und die Antriebssteuerungen (3) mit übergeordneten Steuereinheiten (9) verbunden sind, die Antriebssteuerungen (3) der Antriebsgruppen (2) über ein eigenes Antriebsdatennetz (10) untereinander verbunden sind und die Antriebsregler (6) einer Antriebsgruppe (2) mittels eines lokalen, insbesondere in der Antriebssteuerung (3) erzeugten, über den Antriebsbus (8) übertragenen Synchronisationstaktes (T_{L}) synchronisiert werden, und wobei die lokalen Synchronisationstakte (T_{L}) über das Antriebsdatennetz (10) an einen globalen Synchronisationstakt (T_{G}) angeglichen werden, für die Antriebsgruppen bestimmte Sollwertdaten (S₁...S_{N}) synchron nach Massgabe des globalen Synchronisationstaktes (T_{G}) zwischen den Antriebssteuerungen (3) der Antriebsgruppen (2) über das Antriebsdatennetz (10) übertragen werden, die über das Antriebsdatennetz (10) übertragenen Sollwertdaten (S₁...S_{N}) Sollwerte von Leitachsen und/oder Folgeachsen enthalten und die Sollwerte von Leitachsen und Folgeachsen zeitgleich berechnet und über das Antriebsdatennetz (10) übertragen werden,
**dadurch gekennzeichnet,**
**dass** mehrere Antriebsteuerungen (3) zur Bildung des globalen Synchronisationstaktes (T_{G}) ausgerüstet sind und dass mittels einer Vorrangsliste bestimmt wird, welche Antriebssteuerung zur Vorgabe des globalen Synchronisationstaktes (T_{G}) berechtigt ist.

19. Antriebssystem nach Anspruch 18, **dadurch gekennzeichnet, dass** die über das Antriebsdatennetz (10) übertragenen Sollwertdaten (S₁...S_{N}) Positionsangaben von Leitachsen, insbesondere von virtuellen Leitachsen, enthalten.

20. Antriebssystem nach Anspruch 18, **dadurch gekennzeichnet, dass** die Sollwerte (S₁...S_{N}) der Antriebsgruppen (2) nach Massgabe eines Positionswertes einer oder mehrerer virtueller Leitachsen in den Antriebssteuerungen (3) berechnet werden.

21. Antriebssystem nach einem der Ansprüche 18 bis 20, **dadurch gekennzeichnet, dass** die Vorrangsliste zyklisch durchlaufen wird, so dass der globale Synchronisationstakt (T_{G}) nacheinander für eine bestimmte Zeitspanne von verschiedenen Antriebssteuerungen (3) erzeugt wird.

22. Antriebssystem nach einem der Ansprüche 18 bis 20, **dadurch gekennzeichnet, dass** ein Synchronisationstaktgeber (11) in das Antriebsdatennetz eingebunden ist, der für die Erzeugung des globalen Synchronisationstaktes (T_{G}) geeignet ist.

23. Antriebssystem nach einem der Ansprüche 18 bis 22, **dadurch gekennzeichnet, dass** der globale Synchronisationstakt (T_{G}) in einen Haupttakt (T_{GH}) und mindestens einen Nebentakt (T_{GN}) unterteilt ist.

24. Antriebssystem nach einem der Ansprüche 18 bis 23, **dadurch gekennzeichnet, dass** die Sollwertdaten (S₁...S_{N}) in festen Zeitfenstern übertragen werden.

25. Antriebssystem nach Anspruch 20, **dadurch gekennzeichnet, dass** die Positionswerte der virtuellen Leitachsen durch Integration von vorgegebenen Geschwindigkeitssollwerten berechnet werden.

26. Antriebssystem nach Anspruch 18 **dadurch gekennzeichnet, dass** die Sollwertdaten (S₁...S_{N}) synchron und zyklisch über das Antriebsdatennetz (10) bzw. den Antriebsbus (8) übertragen werden, dass die Sollwerte synchron und zyklisch in den Antriebssteuerungen (3) berechnet werden und dass die Antriebe (4) synchron und zyklisch geregelt werden.

27. Antriebssystem nach Anspruch 18, **dadurch gekennzeichnet, dass** Hierarchien von Hauptleitachsen und Leitachsen gebildet werden, so dass die Sollwertdaten einer oder mehrerer Leitachsen aus den Sollwertdaten einer oder mehrerer Hauptleitachsen berechnet werden.

28. Antriebssystem nach Anspruch 18 und 27, **dadurch gekennzeichnet, dass** zu einem Zeitpunkt mehrere Leitachsen und/oder Hauptleitachsen gebildet werden.

29. Antriebssystem nach Anspruch 18, **dadurch gekennzeichnet, dass** durch eine variable Zuordnung von Antrieben (4) zu Leitachsen flexible Produktionsgruppen gebildet werden.

30. Rotationsdruckmaschine mit einem Antriebssystem umfassend eine Vielzahl von Zylindern, **dadurch gekennzeichnet, dass** das Antriebssystem nach einem der Ansprüche 1 bis 17 betrieben wird.

31. Rotationsdruckmaschine mit einem Antriebssystem umfassend eine Vielzahl von Zylindern, **dadurch gekennzeichnet, dass** das Antriebssystem nach einem der Ansprüche 18 bis 29 ausgebildet ist.

## Claims

1. Method of operating a drive system (1) which comprises at least two drive groups (2), each drive group (2) comprising a drive control means (3) and at least one drive (4), a drive comprising at least one motor (5) and a drive controller (6), and the drive controllers of a drive group being connected to one another via a drive bus (8), and the drive control means (3) being connected to higher-order control units (9), and the drive control means (3) of the drive groups (2) being connected to one another via a dedicated drive data network (10), and the drive controllers (6) of a drive group (2) being synchronized by means of a synchronization clock (T_{L}) which is local, in particular generated in the drive control means (3) and transmitted via the drive bus (8), and the local synchronization clocks (T_{L}) being made equal to a global synchronization clock (T_{G}) via the drive data network (10), desired value data (S₁...S_{N}) intended for the drive groups and based on the global synchronization clock (T_{G}) being transmitted synchronously between the drive control means (3) of the drive groups (2) by means of the drive data network, the desired value data (S₁...S_{N}) which is transmitted via the drive data network (10) containing desired values of master shafts and/or slave shafts and the desired values of master shafts and slave shafts being isochronously calculated and transmitted via the drive data network (10),
**characterized in that**
a plurality of drive control means (3) are equipped to form the global synchronization clock (T_{G}), and
**in that** it is determined, by means of a priority list, which drive control means is authorized to predefine the global synchronization clock (T_{G}).

2. Method according to Claim 1, **characterized in that** the desired value data (S₁...S_{N}) transmitted via the drive data network (10) contains position information about master shafts, in particular about virtual master shafts.

3. Method according to Claim 1, **characterized in that** the desired values (S₁...S_{N}) of the drive groups (2) are calculated in the drive control means (3) on the basis of a position value of one or more virtual master shafts.

4. Method according to one of Claims 1 to 3, **characterized in that** the priority list is run through cyclically so that the global synchronization clock (T_{G}) is generated successively for a specific time period by various drive control means (3).

5. Method according to one of Claims 1 to 3, **characterized in that** a synchronization clock generator (11), which is suitable for the generation of the global synchronization clock (T_{G}), is incorporated into the drive data network.

6. Method according to one of Claims 1 to 5, **characterized in that** the global synchronization clock (T_{G}) is subdivided into a main clock (T_{GH}) and at least one secondary clock (T_{GN}).

7. Method according to one of Claims 1 to 6, **characterized in that** the desired value data (S₁...S_{N}) is transmitted in fixed time windows.

8. Method according to Claim 3, **characterized in that** the position values of the virtual master shafts are calculated by integrating predefined speed desired values.

9. Method according to Claim 1, **characterized in that** the desired value data (S₁...S_{N}) is transmitted synchronously and cyclically via the drive data network (10) and the drive bus (8), **in that** the desired values are calculated synchronously and cyclically in the drive control means (3), and **in that** the drives (4) are controlled synchronously and cyclically.

10. Method according to Claim 1, **characterized in that** hierarchies of main master shafts and master shafts are formed, so that the desired value data of one or more master shafts is calculated from the desired value data of one or more main master shafts.

11. Method according to Claim 1 and 10, **characterized in that** at one point in time a plurality of master shafts and/or main master shafts are formed.

12. Method according to Claim 1, **characterized in that** flexible production groups are formed by means of a variable assignment of drives (4) to master shafts.

13. Device for carrying out the method according to Claim 1, having at least two drive control means (3) which are connected to higher-order control units (9), are connected to one another via a dedicated drive data network (10) and are in each case connected to at least one drive (4) by means of a drive bus (8), the drive bus (8) being used to synchronize the drives (4), **characterized in that** at least two drive control means (3) comprise a synchronization clock generator (11) for forming the global synchronization clock (T_{G}), and **in that** a priority list is used to determine which drive control means is authorized to predefine the global synchronization clock (T_{G}).

14. Device according to Claim 13, **characterized in that** the drive data network (10) has a ring-like or bus-like structure.

15. Device according to Claim 14, **characterized in that** the drive data network (10) comprises a first and a second partial network (12 and 13), the global synchronization clock (T_{G}) being transmitted via the first partial network (12) and the desired value data (S₁...S_{N}) being transmitted via the second partial network (13).

16. Device according to Claim 15, **characterized in that** the drive data network comprises a first and a second partial network (12 and 13), a global synchronization clock generator (11) being incorporated into the first partial network (12), from which generator data lines lead in star fashion to the drive control means for the drives (4), and the second partial network (13) connects all the drive control means (3) and has a ring-like or bus-like form.

17. Device according to Claim 15 or 16, **characterized in that** the drive data network is redundantly designed.

18. Drive system (1) which comprises at least two drive groups (2), each drive group (2) comprising a drive control means (3) and at least one drive (4), a drive comprising at least one motor (5) and a drive controller (6), and the drive controllers of a drive group being connected to one another via a drive bus (8), and the drive control means (3) being connected to higher-order control units (9), the drive control means (3) of the drive groups (2) being connected to one another via a dedicated drive data network (10), and the drive controllers (6) of a drive group (2) being synchronized by means of a synchronization clock (T_{L}) which is local, in particular generated in the drive control means (3) and transmitted via the drive bus (8), and the local synchronization clocks (T_{L}) being made equal to a global synchronization clock (T_{G}) via the drive data network (10), desired value data (S₁...S_{N}) intended for the drive groups and based on the global synchronization clock (T_{G}) being transmitted synchronously between the drive control means (3) of the drive groups (2) by means of the drive data network, the desired value data (S₁...S_{N}) which is transmitted via the drive data network (10) containing desired values of master shafts and/or slave shafts and the desired values of master shafts and slave shafts being synchronously calculated and transmitted via the drive data network (10),
**characterized in that**
a plurality of drive control means (3) are equipped to form the global synchronization clock (TG), and **in that** it is determined, by means of a priority list, which drive control means is authorized to predefine the global synchronization clock (TG).

19. Drive system according to Claim 18, **characterized in that** the desired value data (S₁...S_{N}) transmitted via the drive data network (10) contains position information about master shafts, in particular about virtual master shafts.

20. Drive system according to Claim 18, **characterized in that** the desired values (S₁...S_{N}) of the drive groups (2) are calculated in the drive control means (3) on the basis of a position value of one or more virtual master shafts.

21. Drive system according to one of Claims 18 to 20, **characterized in that** the priority list is run through cyclically so that the global synchronization clock (T_{G}) is generated successively for a specific time period by various drive control means (3).

22. Drive system according to one of Claims 18 to 20, **characterized in that** a synchronization clock generator (11), which is suitable for the generation of the global synchronization clock (T_{G}), is incorporated into the drive data network.

23. Drive system according to one of Claims 18 to 22, **characterized in that** the global synchronization clock (T_{G}) is subdivided into a main clock (T_{GH}) and at least one secondary clock (T_{GN}).

24. Drive system according to one of Claims 18 to 23, **characterized in that** the desired value data (S₁...S_{N}) is transmitted in fixed time windows.

25. Drive system according to Claim 20, **characterized in that** the position values of the virtual master shafts are calculated by integrating predefined speed desired values.

26. Drive system according to Claim 18, **characterized in that** the desired value data (S₁...S_{N}) is transmitted synchronously and cyclically via the drive data network (10) and the drive bus (8), **in that** the desired values are calculated synchronously and cyclically in the drive control means (3), and **in that** the drives (4) are controlled synchronously and cyclically.

27. Drive system according to Claim 18, **characterized in that** hierarchies of main master shafts and master shafts are formed, so that the desired value data of one or more master shafts is calculated from the desired value data of one or more main master shafts.

28. Drive system according to Claim 18 and 27, **characterized in that** at one point in time a plurality of master shafts and/or main master shafts are formed.

29. Drive system according to Claim 18, **characterized in that** flexible production groups are formed by means of a variable assignment of drives (4) to master shafts.

30. Rotary printing machine with a drive system comprising a large number of cylinders, **characterized in that** the drive system is operated according to one of Claims 1 to 17.

31. Rotary printing machine with a drive system comprising a large number of cylinders, **characterized in that** the drive system is constructed according to one of Claims 18 to 29.

## Revendications

1. Procédé d'exploitation d'un système d'entraînement (1) qui comprend au moins deux groupes d'entraînement (2), dans lequel chaque groupe d'entraînement (2) comprend une commande d'entraînement (3) et au moins un mécanisme d'entraînement (4), un mécanisme d'entraînement comprend au moins un moteur (5) et un régulateur d'entraînement (6) et les régulateurs d'entraînement d'un groupe d'entraînement sont reliés l'un à l'autre via un bus d'entraînement (8) et les commandes d'entraînement (3) par des unités de commande prioritaires (9), les commandes d'entraînement (3) des groupes d'entraînement (2) sont reliés l'un à l'autre via un réseau propre de données d'entraînement (10) et les régulateurs d'entraînement (6) d'un groupe d'entraînement (2) sont synchronisés au moyen d'un rythme de synchronisation local (T_{L}) produit en particulier dans la commande d'entraînement (3) et transféré via le bus d'entraînement (8), et dans lequel les rythmes de synchronisation locaux (T_{L}) sont adaptés via le réseau de données d'entraînement (10) à un rythme de synchronisation global (T_{G}), des données de valeurs théoriques (S₁ ... S_{N}) déterminées pour les groupes d'entraînement sont transférées en synchronisme conformément au rythme de synchronisation global (T_{G}) entre les commandes d'entraînement (3) des groupes d'entraînement (2) via le réseau de données d'entraînement (10), les valeurs de données théoriques S₁ ... S_{N}) transmises via le réseau de données d'entraînement (10) contiennent des valeurs théoriques d'axes directeurs et/ou d'axes secondaires et les valeurs théoriques d'axes directeurs et d'axes secondaires sont calculées simultanément et transférées via le réseau de données d'entraînement (10),
**caractérisé en ce que**
plusieurs commandes d'entraînement (3) sont équipées pour la formation du rythme de synchronisation global (T_{G}), et
on détermine au moyen d'une liste de priorités la commande d'entraînement qui sera à même d'affecter le rythme de synchronisation global (T_{G}).

2. Procédé selon la revendication 1, **caractérisé en ce que** les données de valeurs théoriques (S₁ ... S_{N}) transférées via le réseau de données d'entraînement (10) contiennent des indications de position d'axes directeurs, en particulier d'axes directeurs virtuels.

3. Procédé selon la revendication 1, **caractérisé en ce que** les valeurs théoriques (S₁ ... S_{N}) des groupes d'entraînement (2) sont calculées dans les commandes d'entraînement (3) conformément à une valeur de position d'un ou plusieurs axes directeurs virtuels.

4. Procédé selon l'une quelconque des revendications 1 à 3, **caractérisé en ce que** la liste de priorités est parcourue de manière cyclique de telle sorte que le rythme de synchronisation global (T_{G}) soit produit successivement pour un intervalle de temps déterminé par diverses commandes d'entraînement (3).

5. Procédé selon l'une quelconque des revendications 1 à 3, **caractérisé en ce qu'**un générateur de rythme de synchronisation (11) est intégré au réseau de données d'entraînement, qui convient à la production du rythme de synchronisation global (T_{G}).

6. Procédé selon l'une quelconque des revendications 1 à 5, **caractérisé en ce que** le rythme de synchronisation global (T_{G}) est divisé en un rythme principal (T_{GH}) et en au moins un rythme secondaire (T_{GN}).

7. Procédé selon l'une quelconque des revendications 1 à 6, **caractérisé en ce que** les données de valeurs théoriques (S₁ ... S_{N}) sont transférées dans des fenêtres temporelles fixes.

8. Procédé selon la revendication 3, **caractérisé en ce que** les valeurs de position des axes directeurs virtuels sont calculées par intégration de valeurs théoriques de vitesse prédéterminées.

9. Procédé selon la revendication 1, **caractérisé en ce que** les données de valeurs théoriques (S₁ ... S_{N}) sont transférées en synchronisme de manière cyclique via le réseau de données d'entraînement (10) ou selon le cas le bus d'entraînement (8), **en ce que** les valeurs théoriques sont calculées de manière synchrone et cyclique dans les commandes d'entraînement (3) et **en ce que** les mécanismes d'entraînement (4) sont régulés de manière synchrone et cyclique.

10. Procédé selon la revendication 1, **caractérisé en ce que** des hiérarchies d'axes directeurs principaux et d'axes directeurs sont formés de manière que les données de valeurs théoriques d'un ou plusieurs axes directeurs soient calculées à partir des données de valeurs théoriques d'un ou plusieurs axes directeurs principaux.

11. Procédé selon les revendications 1 et 10, **caractérisé en ce que**, à un moment, plusieurs axes directeurs et/ou axes directeurs principaux sont formés.

12. Procédé selon la revendication 1, **caractérisé en ce que** des groupes de production souples sont formés par une affectation variable de mécanismes d'entraînement (4) à des axes directeurs.

13. Dispositif pour réaliser le procédé selon la. revendication 1, comprenant au moins deux commandes d'entraînement (3) reliées à des unités de commande prioritaires (9), qui sont reliées l'une à l'autre via un réseau de données d'entraînement (10) propre et d'un bus d'entraînement (8), à chaque fois, à au moins un mécanisme d'entraînement (4), le bus d'entraînement (8) servant à synchroniser les mécanismes d'entraînement (4), **caractérisé en ce qu'**au moins deux commandes d'entraînement (3) comprennent un générateur de rythme de synchronisation (11) pour former le rythme de synchronisation global (T_{G}) et **en ce que**, au moyen d'une liste de priorités, on détermine la commande d'entraînement qui sera à même d'affecter le rythme de synchronisation global (T_{G}).

14. Dispositif selon la revendication 13, **caractérisé en ce que** le réseau de données d'entraînement (10) présente une structure en forme d'anneau ou de bus.

15. Dispositif selon la revendication 14, **caractérisé en ce que** le réseau de données d'entraînement (10) comprend un premier et un second réseaux partiels (12 ou selon le cas 13), le rythme de synchronisation global (T_{G}) étant transféré via le premier réseau partiel (12) et les données de valeurs théoriques (S₁ ... S_{N}) via le second réseau partiel (13).

16. Dispositif selon la revendication 14, **caractérisé en ce que** le réseau de données d'entraînement comprend un premier et un second réseaux partiels (12 ou selon le cas 13), dans lequel, dans le premier réseau partiel (12), est intégré un générateur de rythme de synchronisation global (11), d'où des lignes de données en étoile mènent aux commandes d'entraînement (3) pour les mécanismes d'entraînement (4), et le second réseau partiel (13) relie toutes les commandes d'entraînement (3) et présente une forme en anneau ou en bus.

17. Procédé selon la revendication 15 ou 16, **caractérisé en ce que** le réseau de données d'entraînement (10) est réalisé en version redondante.

18. Système d'entraînement (1) qui comprend au moins deux groupes d'entraînement (2), dans lequel chaque groupe d'entraînement (2) comprend une commande d'entraînement (3) et au moins un mécanisme d'entraînement (4), un mécanisme d'entraînement comprenant au moins un moteur (5) et un régulateur d'entraînement (6) et les régulateurs d'entraînement d'un groupe d'entraînement sont reliés l'un à l'autre via un bus d'entraînement (8) et les commandes d'entraînement (3) par des unités de commande prioritaires (9), les commandes d'entraînement (3) des groupes d'entraînement (2) sont reliés l'un à l'autre via un réseau propre de données d'entraînement (10) et les régulateurs d'entraînement (6) d'un groupe d'entraînement (2) sont synchronisés au moyen d'un rythme de synchronisation local (T_{L}) produit en particulier dans la commande d'entraînement (3) et transféré via le bus d'entraînement (8), et dans lequel les rythmes de synchronisation locaux (T_{L}) sont adaptés via le réseau de données d'entraînement (10) à un rythme de synchronisation global (T_{G}), des données de valeurs théoriques (S₁ ... S_{N}) déterminées pour les groupes d'entraînement sont transférées en synchronisme conformément au rythme de synchronisation global (T_{G}) entre les commandes d'entraînement (3) des groupes d'entraînement (2) via le réseau de données d'entraînement (10), les valeurs de données théoriques (S₁ ... S_{N}) transmises via le réseau de données d'entraînement (10) contiennent des valeurs théoriques d'axes directeurs et/ou d'axes secondaires et les valeurs théoriques d'axes directeurs et d'axes secondaires sont calculées simultanément et transférées via le réseau de données d'entraînement (10),
**caractérisé en ce que**
plusieurs commandes d'entraînement (3) sont équipées pour la formation du rythme de synchronisation-global (T_{G}) et on détermine au moyen d'une liste de priorités la commande d'entraînement qui sera à même d'affecter le rythme de synchronisation global (T_{G}).

19. Système d'entraînement selon la revendication 18, **caractérisé en ce que** les données de valeurs théoriques (S₁ ... S_{N}) transférées via le réseau de données d'entraînement (10) contiennent des indications de position d'axes directeurs, en particulier d'axes directeurs virtuels.

20. Système d'entraînement selon la revendication 18, **caractérisé en ce que** les valeurs théoriques (S₁ ... S_{N}) des groupes d'entraînement (2) sont calculées dans les commandes d'entraînement (3) conformément à une valeur de position d'un ou plusieurs axes directeurs virtuels.

21. Système d'entraînement selon l'une quelconque des revendications 18 à 20, **caractérisé en ce que** la liste de priorités est parcourue de manière cyclique de telle sorte que le rythme de synchronisation global (T_{G}) soit produit successivement pour un intervalle de temps déterminé par diverses commandes d'entraînement (3).

22. Système d'entraînement selon l'une quelconque des revendications 18 à 20, **caractérisé en ce qu'**un générateur de rythme de synchronisation (11) est intégré au réseau de données d'entraînement, qui convient à la production du rythme de synchronisation global (T_{G}).

23. Système d'entraînement selon l'une quelconque des revendications 18 à 22, **caractérisé en ce que** le rythme de synchronisation global (T_{G}) est divisé en un rythme principal (T_{GH}) et en au moins un rythme secondaire (T_{GN}).

24. Système d'entraînement selon l'une quelconque des revendications 18 à 23, **caractérisé en ce que** les données de valeurs théoriques (S₁ ... S_{N}) sont transférées dans des fenêtres temporelles fixes.

25. Système d'entraînement selon la revendication 20, **caractérisé en ce que** les valeurs de position des axes directeurs virtuels sont calculées par intégration de valeurs théoriques de vitesse prédéterminées.

26. Système d'entraînement selon la revendication 18, **caractérisé en ce que** les données de valeurs théoriques (S₁ ... S_{N}) sont transférées en synchronisme de manière cyclique via le réseau de données d'entraînement (10) ou selon le cas le bus d'entraînement (8), **en ce que** les valeurs théoriques sont calculées de manière synchrone et cyclique dans les commandes d'entraînement (3) et **en ce que** les mécanismes d'entraînement (4) sont régulés de manière synchrone et cyclique.

27. Système d'entraînement selon la revendication 18, **caractérisé en ce que** des hiérarchies d'axes directeurs principaux et d'axes directeurs sont formés de manière que les données de valeurs théoriques d'un ou plusieurs axes directeurs soient calculées à partir des données de valeurs théoriques d'un ou plusieurs axes directeurs principaux.

28. Système d'entraînement selon les revendications 18 et 27, **caractérisé en ce que**, à un moment, plusieurs axes directeurs et/ou axes directeurs principaux sont formés.

29. Système d'entraînement selon la revendication 18, **caractérisé en ce que** des groupes de production souples sont formés par une affectation variable de mécanismes d'entraînement (4) à des axes directeurs.

30. Presse rotative avec un système d'entraînement comprenant une pluralité de cylindres, **caractérisée en ce que** le système d'entraînement est exploité selon l'une quelconque des revendications 1 à 17.

31. Presse rotative avec un système d'entraînement comprenant une pluralité de cylindres, **caractérisée en ce que** le système d'entraînement est configuré selon l'une quelconque des revendications 18. à 29.
